(19) Europäisches Patentamt European Patent Office Office européen des brevets

(11) **EP 1 256 230 B1**

(12) **EUROPEAN PATENT SPECIFICATION**

| | |
|---|---|
| (45) Date of publication and mention of the grant of the patent: **07.04.2010 Bulletin 2010/14** | (51) Int Cl.: ***H04N 1/40*** *(2006.01)*  ***H04N 1/405*** *(2006.01)* |
| (21) Application number: **00902839.0** | (86) International application number: **PCT/IL2000/000079** |
| (22) Date of filing: **06.02.2000** | (87) International publication number: **WO 2001/058140 (09.08.2001 Gazette 2001/32)** |

(54) **Screening method avoiding self-inteference between cell grid and pixel grid**

Rasterungsverfahren, was Selbst-Störung zwischen einem Zellengitter und Pixelgitter vermeidet

Procédé de criblage évitant l'auto-interférence entre la grille de cellules et la grille de pixels

(84) Designated Contracting States:
**DE FR GB IT**

(43) Date of publication of application:
**13.11.2002 Bulletin 2002/46**

(73) Proprietor: **Hewlett-Packard Indigo B.V.**
**6221 SH Maastricht (NL)**

(72) Inventor: **MOSENSON, Nir**
**99797 Carmey Josef (IL)**

(74) Representative: **Leadbetter, Benedict et al**
**Hewlett-Packard Espanola, S.L.**
**Legal Department**
**Avda Graells, 501**
**08174 Sant Cugat del Vallès**
**Barcelona (ES)**

(56) References cited:
EP-A- 0 342 640    EP-A- 0 427 380
EP-A- 0 525 520    EP-A- 0 549 326
US-A- 4 965 599    US-A- 4 977 458

- YOSHIHARU MORIMOTO ET AL: "SCREENING AND MOIRE SUPPRESSION IN PRINTING AND ITS ANALYSIS BY FOURIER TRANSFORM" SYSTEMS & COMPUTERS IN JAPAN,US, SCRIPTA TECHNICA JOURNALS. NEW YORK, vol. 21, no. 2, 1990, pages 98-105, XP000148375 ISSN: 0882-1666
- AMIDROR I ET AL: "SPECTRAL ANALYSIS AND MINIMIZATION OF MOIRE PATTERNS IN COLOR SEPARATION" JOURNAL OF ELECTRONIC IMAGING,US,SPIE + IS&T, vol. 3, no. 3, 1 July 1994 (1994-07-01), pages 295-317, XP000465434 ISSN: 1017-9909
- RAO T S ET AL: "ANALYSIS OF ORDERED DITHER FOR ARBITRARY SAMPLING LATTICES AND SCREEN PERIODICITIES" IEEE TRANSACTIONS ON ACOUSTICS, SPEECH AND SIGNAL PROCESSING,US,IEEE INC. NEW YORK, vol. 38, no. 11, 1 November 1990 (1990-11-01), pages 1981-2000, XP000171015

**Description**

FIELD OF THE INVENTION

The present invention is related to the field of half-tone screening of digital images, and in particular to methods of reducing pattering of such half-toned images.

BACKGROUND OF THE INVENTION

Problems of interference between half-tone screens of different colors are well known in the art. Such interference is known to cause Moire patterns which may be attenuated, but which are difficult to remove entirely, especially for digitally produced images. A different phenomena is the problem of generation of periodic patterns in single digitally generated screens. In Bartles, R., "Redistributing Dot Connections to Avoid Visible Tile Replication in AM Halftone Screens", IS&T's NIP15: International Conference on Digital Printing Technologies (1999), pp. 354-357. This problem is described as being due to variations of the position of cell centers. This reference suggests reducing the effect by redistributing the contact points between adjacent spots which form the half-tone.

US patent 4,456,924 is concerned with a way to produce screens at any angle, by applying a rotation transformation to a given matrix. It is suggested that random noise be added to the image. This is stated as being effective to blur artifacts resulting from rounding. US patent 4,700,235 is similar to the above patent; here as well, some random noise is added.

Document EP 0 427 380 A2 describes a method for producing half-tone images such that Moiré patterns arising from the alignment of "supertiles" containing a plurality of halftone cells are prevented. Identical supertiles are aligned in repetitive fashion to approximate a grid over the whole image. When the supertiles are aligned the screen grid may be shifted from one supertile to the adjacent one. This shift accumulates and causes the effective angle between the basic pixel raster and the cells to be changed, as a result of which the Moiré patterns may appear. In order to prevent this, it is suggested to minimize the accumulated shift in the half-tone screen grid.

Document EP 0 525 520 A describes a method for preventing Moiré patterns in reproduction of half-tone images with different color half-tone screens. It is known that conventionally Moiré patterns between different color half-tone screens are minimized by using screen angles (orientation relative to an horizontal axis) for the different half-tone screens that are exactly 30 and 60 degrees offset with respect to each other, and by using exactly the same line ruling (number of dots per measurement unit, e.g. 1pi, measured in the direction of the screen angle) for the half-tone screens. The Moiré patterns in the describes method are avoided by choosing the screen angles such that their deviations from the conventional screen angles are exactly offset by the deviations in the line rulings of the different color half-tone screens.

The document of Yoshiharu Morimoto et al., "Screening and Moiré Suppression in Printing and its Analysis by Fourier Transform", Systems & Computers in Japan, US, Scripta Technica Journals, New York, Vol. 21, No. 2, Pages 98-105, 1990, describes the suppression of Moiré patterns in half-tone images due to high-frequency components in the image by performing a Fourier transformation of the image. The Fourier transformation decomposes the image into a spectrum of its frequency components. Those frequency components which would result in visible Moiré in the final half-tone image are filtered. The half-tone image is then reproduced by taking the inverse of the filtered Fourier transform.

This effect is referred to herein, for reasons which will become clear infra, as "grid interference".

However, each of these methods attempts to reduce grid interference by changing the halftone technique. No clear understanding of the source of grid interference or of its prediction or of how to avoid it, is present in the prior art.

SUMMARY OF THE INVENTION

One aspect of some preferred embodiment of the present invention is related to an understanding of the cause grid interference, its prediction and methods of its avoidance.

In a preferred embodiment of the invention, a set of characteristic frequencies of the screen is determined. Based on this determination, the severity of the effect can be determined. Those screens which have low characteristic frequencies are avoided, since they correspond to strong grid interference.

In general, digital screen printing is subject to a number of constraints. On the one hand, it would be best if the angles of the cell grids were the same as those used in analog screen printing. In general, for analog printing, the cell grid directions for cyan, magenta and black are at angles of 15, 75 and 45 degrees respectively. Yellow is generally placed at 0 degrees. This combination of angles has been shown to result in minimal Moire from interference between the cell grids. However, these angles are not rational angles and severe memory problems or computational requirements generally make their use undesirable. It is known that small deviations from these desired angles can be tolerated, under certain constraints.

In accordance with a preferred embodiment of the invention an additional constraint is placed on the angle between the angle of the digital pixels (generally 0 degrees), the angle of the cell grid and the line ruling (1pi). This constraint is a function of the angles and of the pixel and cell frequencies, as described below and is related to a repeat frequency generated by the interaction of these elements.

An aspect of the invention is related to ranges of angles line rulings and pixel resolution that result in little or no grid interference.

There is thus provided, in accordance with a preferred embodiment of the invention, a method of choosing a screening geometry, comprising:

determining at least one characteristic self-interference frequency of a proposed screening geometry for a single screen; and
accepting the screen if the characteristic frequency is greater than a given value.

Preferably, the at least one frequency comprises a plurality of frequencies. Preferably, the given value varies depending on a harmonic number of the frequency. Preferably, the given value is higher for self interference frequencies having a higher characteristic amplitude.

In a preferred embodiment of the invention, determining the frequency comprises:

providing a proposed pixel grid, including a pixel repeat; and
providing a proposed cell grid, including cell repeat and angle between the cell grid and the pixel grid;
determining said at least one self interference frequency as an interference frequency between the cell grid and the pixel grid.

In a preferred embodiment of the invention, an image is to be printed with the screen using pulse width modulation of a writing beam.

In a preferred embodiment of the invention a fundamental self interference of the y component of a function associated with the interference has a given fundamental value greater than 0.7B, where the frequency compared to the given value is $|\vec{f} \bmod(\vec{V}^1, \vec{V}^2)|$, where $(\vec{V}^1, \vec{V}^2)$ are basis vectors of a dual grid of the cell grid, 2B is the width of a Brillouin zone defined as (1/C) and C is the cell repeat. Preferably the given fundamental value is greater than 0.8B or 0.9B.

In a preferred embodiment of the invention, a first harmonic self interference of the y component of a function associated with the interference has a given first harmonic value greater than 0.5B, where the frequency compared to the given value is $|\vec{f} \bmod(\vec{V}^1, \vec{V}^2)|$, where $(\vec{V}^1, \vec{V}^2)$ are basis vectors of a dual grid of the cell grid, 2B is the width of a Brillouin zone defined as (1/C) and C is the cell repeat. Preferably, the given first harmonic value is greater than 0.7B or 0.8B.

In a preferred embodiment of the invention, a second harmonic self interference of the y component of a function associated with the interference has a second harmonic given value greater than 0.2B, where the frequency compared to the given value is $|\vec{f} \bmod(\vec{V}^1, \vec{V}^2)|$, where $(\vec{V}^1, \vec{V}^2)$ are basis vectors of a dual grid of the cell grid, 2B is the width of a Brillouin zone defined as (1/C) and C is the cell repeat. Preferably, the second harmonic given value is greater than 0.3B or 0.5B.

In a preferred embodiment of the invention, the function is a function of the error vector, the vector being defined as the vector from the center of the cell to the nearest pixel junction.

In a preferred embodiment of the invention, an image is to be printed with the screen using a fixed written pixel size.

In a preferred embodiment of the invention, a self interference frequency, characterized by an x,y frequency pair (±1,0) or (0,±1) has a first given value greater than 0.7B, where the frequency compared to the given value is $|\vec{f} \bmod(\vec{V}^1, \vec{V}^2)|$, where $(\vec{V}^1, \vec{V}^2)$ are basis vectors of a dual grid of the cell grid, 2B is the width of a Brillouin zone defined as (1/C) and C is the cell repeat. Preferably, the given value is greater than 0.8B or 0.9B.

In a preferred embodiment of the invention, a self interference frequency, characterized by an x,y frequency pair (±2,0) or (0,±2) has a second given value greater than 0.5B, where the frequency compared to the given value is $|\vec{f} \bmod(\vec{V}^1, \vec{V}^2)|$, where $(\vec{V}^1, \vec{V}^2)$ are basis vectors of a dual grid of the cell grid, 2B is the width of a Brillouin zone defined as (1/C) and C is the cell repeat. Preferably, the second given value is greater than 0.6B or 0.8B.

In a preferred embodiment of the invention, a self interference frequency, characterized by an x,y frequency pair (±3,0) or (0,±3) has a third given value greater than 0.2B, where the frequency compared to the given value is $|\vec{f} \bmod(\vec{V}^1, \vec{V}^2)|$, where $(\vec{V}^1, \vec{V}^2)$ are basis vectors of a dual grid of the cell grid, 2B is the width of a Brillouin zone defined as (1/C) and C is the cell repeat. Preferably, the third given value is greater than 0.3B or 0.5B.

In a preferred embodiment of the invention, a self interference frequency, characterized by an x,y frequency pair (±1,±1) has a fourth given value greater than 0.2B, where the frequency compared to the given value is $|\vec{f} \bmod(\vec{V}^1, \vec{V}^2)|$, where $(\vec{V}^1, \vec{V}^2)$ are basis vectors of a dual grid of the cell grid, 2B is the width of a Brillouin zone defined as (1/C) and C is the cell repeat. Preferably, the fourth given value is greater than 0.3B or 0.5B.

In a preferred embodiment of the invention, a self interference frequency, characterized by an x,y frequency pair $(\pm 1, \pm 2)$ or $(\pm 2, \pm 1)$ has a fifth given value greater than 0.2B, where the frequency compared to the given value is $|\vec{f} \bmod(\vec{V}^1, \vec{V}^2)|$, where $(\vec{V}^1, \vec{V}^2)$ are basis vectors of a dual grid of the cell grid, 2B is the width of a Brillouin zone defined as (1/C) and C is the cell repeat. Preferably, the fifth given value is greater than 0.3B or 0.5.

In a preferred embodiment of the invention, the self interference frequency is a function of the error vector, the vector being defined as the vector from the center of the cell to the nearest pixel junction.

In a preferred embodiment of the invention, the given value is independent of an image to which the screen is to be applied.

There is further provided, in accordance with a preferred embodiment of the invention, a separation printed with a screen having pixels on a pixel grid having a pixel repeat and cells on a cell grid having a cell repeat and an angle with the pixel grid, using pulse width modulation of a writing beam, wherein a fundamental self interference of the y component of a function associated with the interference has a first given value greater than 0.7B, where the frequency compared to the given value is $|\vec{f} \bmod(\vec{V}^1, \vec{V}^2)$ where $(\vec{V}^1, \vec{V}^2)$ are basis vectors of a dual grid of the cell grid, 2B is the width of a Brillouin zone defined as (1/C) and C is the cell repeat. Preferably the first given value is greater than 0.8B or 0.9B.

Preferably, a first harmonic self interference of the y component of a function associated with the interference has a given first harmonic value greater than 0.5B, where the frequency compared to the given value is $|\vec{f} \bmod(\vec{V}^1, \vec{V}^2)|$, where $(\vec{V}^1, \vec{V}^2)$ are basis vectors of a dual grid of the cell grid, 2B is the width of a Brillouin zone defined as (1/C) and C is the cell repeat.

There is further provided, in accordance with a preferred embodiment of the invention, a separation printed with a screen having pixels on a pixel grid having a pixel repeat and cells on a cell grid having a cell repeat and an angle with the pixel grid, using pulse width modulation of a writing beam, wherein a fundamental self interference of the y component of a function associated with the interference has a first harmonic self interference frequency of the screen having a first harmonic given value greater than 0.5B, where the frequency compared to the given value is $|\vec{f} \bmod(\vec{V}^1, \vec{V}^2)|$, where $(\vec{V}^1, \vec{V}^2)$ are basis vectors of a dual grid of the cell grid, 2B is the width of a Brillouin zone defined as (1/C) and C is the cell repeat.

Preferably, the first harmonic given value is greater than 0.7B or 0.8B.

In a preferred embodiment of the invention, a second harmonic self interference of the y component of a function associated with the interference has a given second harmonic value greater than 0.2B, where the frequency compared to the given value is $|\vec{f} \bmod(\vec{V}^1, \vec{V}^2)|$, where $(\vec{V}^1, \vec{V}^2)$ are basis vectors of a dual grid of the cell grid, 2B is the width of a Brillouin zone defined as (1/C) and C is the cell repeat.

There is further provided, in accordance with a preferred embodiment of the invention, a separation printed with a screen having pixels on a pixel grid having a pixel repeat and cells on a cell grid having a cell repeat and an angle with the pixel grid, using pulse width modulation of a writing beam, wherein a second harmonic self interference of the y component of a function associated with the interference has a given second harmonic value greater than 0.2B, where the frequency compared to the given value is $|\vec{f} \bmod(\vec{V}^1, \vec{V}^2)|$, where $(\vec{V}^1, \vec{V}^2)$ are basis vectors of a dual grid of the cell grid, 2B is the width of a Brillouin zone defined as (1/C) and C is the cell repeat.

Preferably, the second harmonic given value is 0.3B or 0.5B.

In a preferred embodiment of the invention, the function is a function of the error vector, the vector being defined as the vector from the center of the cell to the nearest pixel junction.

There is further provided, in accordance with a preferred embodiment of the invention, a separation printed with a screen having pixels on a pixel grid having a pixel repeat and cells on a cell grid having a cell repeat and an angle with the pixel grid, using a fixed pixel size, wherein a fundamental self interference frequency of the screen characterized by an x,y frequency pair $(\pm 1, 0)$ or $(0, \pm 1)$ has a first given value greater than 0.7B, wherein a second harmonic self interference of the y component of a function associated with the interference has a given second harmonic value greater than 0.23, where the frequency compared to the given value is $|\vec{f} \bmod(\vec{V}^1, \vec{V}^2)|$, where $(\vec{V}^1, \vec{V}^2)$ are basis vectors of a dual grid of the cell grid, 2B is the width of a Brillouin zone defined as (1/C) and C is the cell repeat.

Preferably, the first given value is greater than 0.8B or 0.9B.

In a preferred embodiment of the invention, a self interference frequency of the screen characterized by an x, y frequency pair $(\pm 2, 0)$ or $(0, \pm 2)$ has a second given value greater than 0.5B, wherein a second harmonic self interference of the y component of a function associated with the interference has a given second harmonic value greater than 0.2B, where the frequency compared to the given value is $|\vec{f} \bmod(\vec{V}^1, \vec{V}^2)|$, where $(\vec{V}^1, \vec{V}^2)$ are basis vectors of a dual grid of the cell grid, 2B is the width of a Brillouin zone defined as (1/C) and C is the cell repeat.

There is further provided, in accordance with a preferred embodiment of the invention, a separation printed with a screen having pixels on a pixel grid having a pixel repeat and cells on a cell grid having a cell repeat and an angle with the pixel grid, using a fixed pixel size, wherein a self interference frequency of the screen characterized by an x,y frequency pair $(\pm 2, 0)$ or $(0, \pm 2)$ has a second given value greater than 0.5B, wherein a second harmonic self interference of the y component of a function associated with the interference has a given second harmonic value greater than 0.2B, where the frequency compared to the given value is $|\vec{f} \bmod(\vec{V}^1, \vec{V}^2)|$, where $(\vec{V}^1, \vec{V}^2)$ are basis vectors of a dual grid of the cell grid, 2B is the width of a Brillouin zone defined as (I/C) and C is the cell repeat.

Preferably, the second given value is greater than 0.6B or 0.8B.

In a preferred embodiment of the invention, a self interference frequency, characterized by an x,y frequency pair ($\pm$3,0) or (0,$\pm$3) has a third given value greater than 0.2B, wherein a second harmonic self interference of the y component of a function associated with the interference has a given second harmonic value greater than 0.2B, where the frequency compared to the given value is $|\vec{f} \bmod(\vec{V}^1, \vec{V}^2)$ where ($\vec{V}^1, \vec{V}^2$) are basis vectors of a dual grid of the cell grid, 2B is the width of a Brillouin zone defined as (1/C) and C is the cell repeat.

There is further provided, in accordance with a preferred embodiment of the invention, a separation printed with a screen having pixels on a pixel grid having a pixel repeat and cells on a cell grid having a cell repeat and an angle with the pixel grid, using a fixed pixel size, wherein a self interference frequency of the screen characterized by an x,y frequency pair ($\pm$3,0) or (0,$\pm$3) has a third given value greater than 0.2B, wherein a second harmonic self interference of the y component of a function associated with the interference has a given second harmonic value greater than 0.2B, where the frequency compared to the given value is $|\vec{f} \bmod(\vec{V}^1, \vec{V}^2)|$, where ($\vec{V}^1, \vec{V}^2$) are basis vectors of a dual grid of the cell grid, 2B is the width of a Brillouin zone defined as (1/C) and C is the cell repeat.

Preferably, the third given value is greater than 0.3B or 0.5B.

In a preferred embodiment of the inventiona self interference frequency, characterized by an x,y frequency pair ($\pm$1,$\pm$1) has a fourth given value greater than 0.2B, wherein a second harmonic self interference of the y component of a function associated with the interference has a given second harmonic value greater than 0.2B, where the frequency compared to the given value is $|\vec{f} \bmod(\vec{V}^1, \vec{V}^2)$ where ($\vec{V}^1, \vec{V}^2$) are basis vectors of a dual grid of the cell grid, 2B is the width of a Brillouin zone defined as (I/C) and C is the cell repeat.

There is further provided, in accordance with a preferred embodiment of the invention, a separation printed with a screen having pixels on a pixel grid having a pixel repeat and cells on a cell grid having a cell repeat and an angle with the pixel grid, using a fixed pixel size, wherein a self interference frequency of the screen characterized by an x,y frequency pair ($\pm$1,$\pm$1) has a fourth given value greater than 0.2B, wherein a second harmonic self interference of the y component of a function associated with the interference has a given second harmonic value greater than 0.2B, where the frequency compared to the given value is $|\vec{f} \bmod(\vec{V}^1, \vec{V}^2)$ where ($\vec{V}^1, \vec{V}^2$) are basis vectors of a dual grid of the cell grid, 2B is the width of a Brillouin zone defined as (1/C) and C is the cell repeat.

In a preferred embodiment of the invention, the fourth given value is greater than 0.3B or 0.5B.

In a preferred embodiment of the invention, a self interference frequency, characterized by an x,y frequency pair ($\pm$1,$\pm$2) or ($\pm$2,$\pm$1) has a fifth given value greater than 0.2B, wherein a second harmonic self interference of the y component of a function associated with the interference has a given second harmonic value greater than 0.2B, where the frequency compared to the given value is $|\vec{f} \bmod(\vec{V}^1, V^2)|$, where ($\vec{V}^1, \vec{V}^2$) are basis vectors of a dual grid of the cell grid, 2B is the width of a Brillouin zone defined as (1/C) and C is the cell repeat.

There is further provided, in accordance with a preferred embodiment of he invention, a separation printed with a screen having pixels on a pixel grid having a pixel repeat and cells on a cell grid having a cell repeat and an angle with the pixel grid, using a fixed pixel size, wherein a self interference frequency of the screen characterized by an x,y frequency pair ($\pm$1,$\pm$2) or ($\pm$2,$\pm$1) has a fifth given value greater than 0.2B, wherein a second harmonic self interference of the y component of a function associated with the interference has a given second harmonic value greater than 0.2B, where the frequency compared to the given value is $|\vec{f} \bmod(\vec{V}^1, \vec{V}^2)|$, where ($\vec{V}^1, \vec{V}^2$) are basis vectors of a dual grid of the cell grid, 2B is the width of a Brillouin zone defined as (1/C) and C is the cell repeat.

Preferably, the fifth given value is greater than 0.3B or 0.5B.

In a preferred embodiment of the invention, the self interference frequency is a function of the error vector, the vector being defined as the vector from the center of the cell to the nearest pixel junction.

In a preferred embodiment of the invention, two and more preferably at least separations are printed in accordance with any of claims 49-68.

The features and combinations of features for which protection are sought are pointed out with particularity in the appended claims. The invention, both as to its general principles and implementation together with it objects and advantages may be more fully understood by reference to the following non-limiting description of preferred embodiments thereof, taken in conjunction with the accompanying drawings:

BRIEF DESCRIPTION OF THE DRAWINGS

Fig. 1 shows a pixel grid and a cell grid, together with printed spots, useful for understanding the present invention;
Fig. 2 shows a pixel grid and a cell grid with the centers of the cell grids being indicated;
Fig. 3 shows an ideal and actual spot as generated by a screening algorithm;
Fig. 4 illustrates variation in spot positions in a digital half-tone screen;

Fig. 5 illustrates variations in spot shapes and orientations in a digital half-tone screen;

Fig. 6 illustrates the concept of a quantization vector, in accordance with a preferred embodiment of the invention;

Figs 7A and 7B illustrate the concept of the error in positioning of a spot, in accordance with a preferred embodiment of the invention;

Fig. 8 shows a pixel division, useful in determining the placement of a second pixel in a two pixel spot;

Figs. 9 and 10 illustrate two examples of grid interference;

Fig. 11 is a graphic display of the norm of the quantization vectors of a specific screen geometry, determined in accordance with a preferred embodiment of the invention;

Fig. 12 is a graphic display of the y component of the quantization vector of a specific screen geometry, determined in accordance with a preferred embodiment of the invention;

Fig. 13 illustrates a one dimensional model of a pixel grid and a cell grid, useful in understanding preferred embodiments of the invention;

Fig. 14 shows a continuous quantization error function signal, determined in accordance with a preferred embodiment of the invention;

Fig. 15 show sampling of the continuous signal of Fig. 14 by the cells geometry;

Fig. 16 shows a two dimensional quantization vector as used in some preferred embodiment of the invention;

Fig. 17 is a graphic display of the y component of the quantization vectors of a specific screen geometry, determined in accordance with a preferred embodiment of the invention;

Fig. 18 illustrates the effect of two dimensional aliasing in rotation of a y signal fundamental vector frequency;

Fig. 19 illustrates the effects of the fundamental and a harmonic frequency on the pattern generated by a given screen geometry, as determined in accordance with a preferred embodiment of the invention;

Fig. 20 shows the positions of the fundamental frequency and first harmonic of the pattern of Fig. 19 in frequency space;

Fig. 21 shows the position of the fundamental and first harmonics of Fig. 20 in the Brillouin zone;

Fig. 22 shows a graph of the y component of the quantization signal of an unacceptable geometry, determined in accordance with a preferred embodiment of the invention;

Fig. 23 shows the positions of the fundamental, first harmonic and second harmonic frequencies in the Brillioun zone of the graph of Fig. 22;

Fig. 24 shows a graph of the y component of the quantization signal of an acceptable geometry, determined in accordance with a preferred embodiment of the invention;

Fig. 25 shows the positions of the fundamental, first harmonic and second harmonic frequencies in the Brillioun zone of the graph of Fig. 24;

Fig. 26 shows a printed pattern where all beams in a multi-laser beam scanner are operative; and

Fig. 27 shows a printed pattern where one beam in a multi-laser beam scanner is not operative.

## DETAILED DESCRIPTION OF PREFERRED EMBODIMENTS

In order to more clearly understand the invention, a brief outline of basis concepts of half-tone grid screening is presented:

### Basic Concepts in Grid Screening

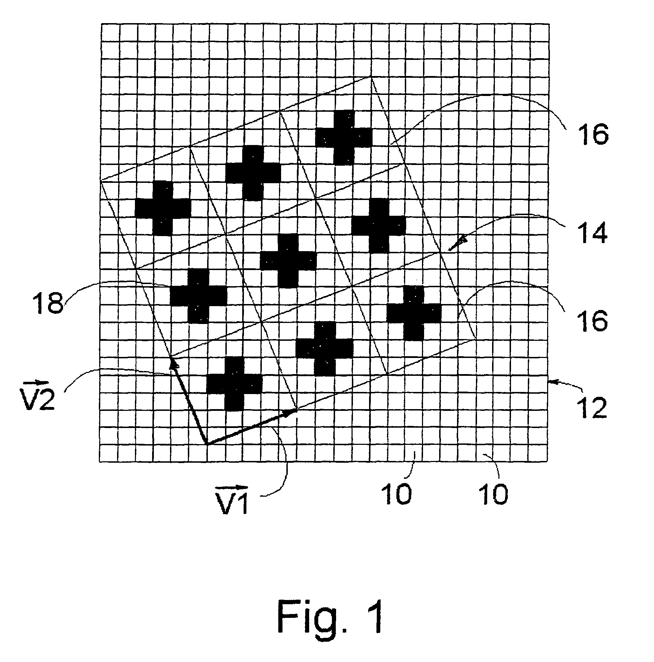

Referring to Fig. 1, an elementary printable unit for a digital image is a pixel 10 aligned in a grid 12, generally known as a pixel grid. For screening, a conceptual grid 14 of cells 16, generally referred to as a cell grid, is superimposed. To produce gray levels in half-tone, clusters of printed pixels 18, generally referred to as spots, are provided around the center of each cell. The higher the gray level, the larger the spot. The cell grid is determined by its base vectors $\vec{V}_1$, $\vec{V}_2$. These vectors are referred to herein as the 'geometry' of the cell grid. In the same way, the pixel grid has two base vectors, referred as the pixel grid geometry. The geometry of the screen is composed of the geometry of the cell grid and the geometry of the pixel grid.

### Quantization Vectors

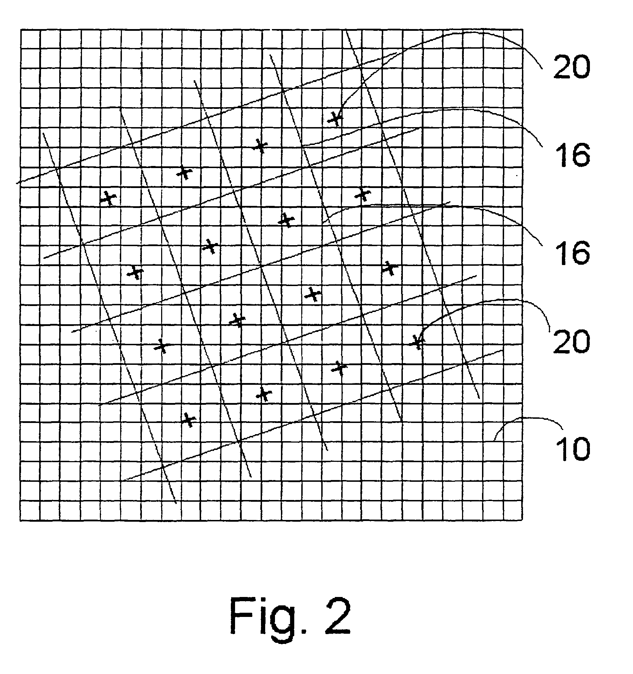

Given a cell grid, the centers 20 of cells 16 (see Fig. 2) are determined. Ideally, the spots should be centered at the cell centers 20. This is impossible however, since the pixels 10, which make up the spots 18 are confined to the pixel grid 12, which does not generally confirm to the cell centers 20.

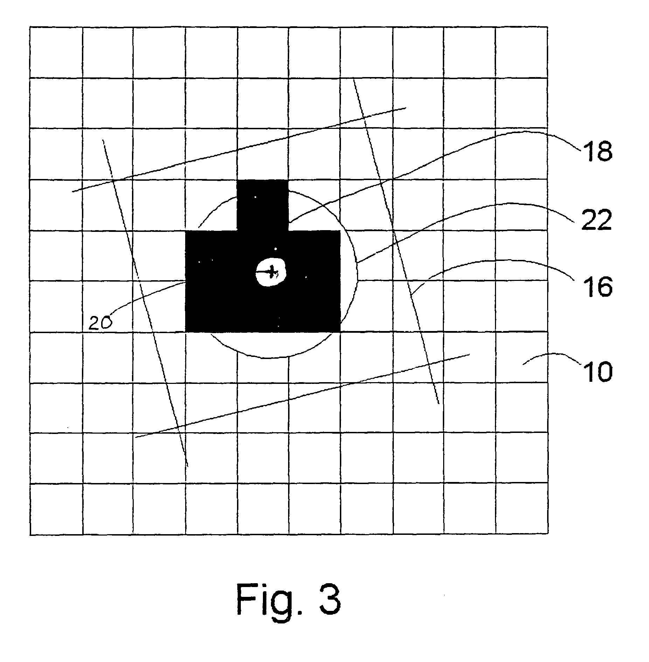

The process of transforming the ideal spot into a real pixel based spot is referred to herein as "quantization." The quantization process causes variations, some of them periodic, in the center and shape of the spot. It is these variations that result in grid interference. Ideally, the spot should be a circular spot 22 around the cell center 20 (See Fig. 3). However, as indicated by practical spot 18, it is neither possible to produce a circular spot, nor is it generally possible to place the center of mass of the spot on the cell center. A portion of spot 18 has been removed for visualization of cell center 20.

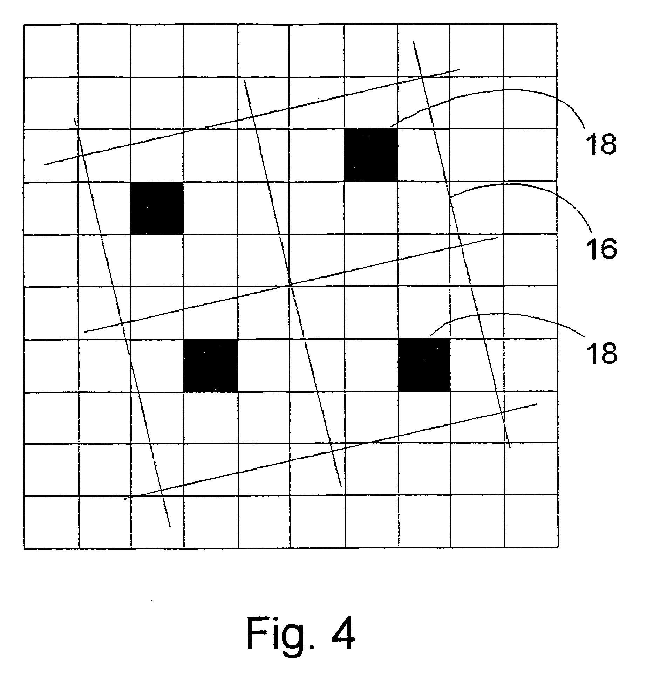

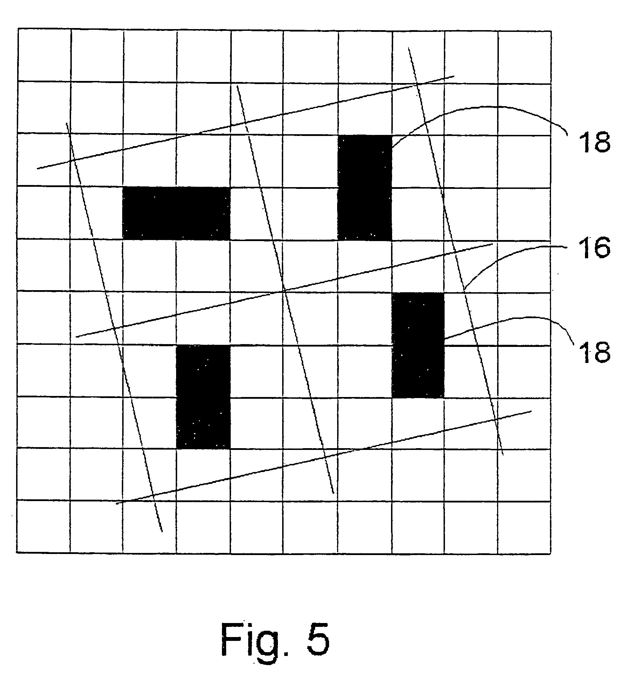

Different spots undergo different quantization processes, according to the position of the ideal center relative to the pixel grid. This can cause variations in the spot shape and/or in the distances between spots (see Figs. 4, 5), for "best fit" spots, depending on the relationship 10 between the cell center 20 and the centers of the pixels in the cell. This non-uniformity can result in the disturbing patterns, which are referred to herein as grid interference

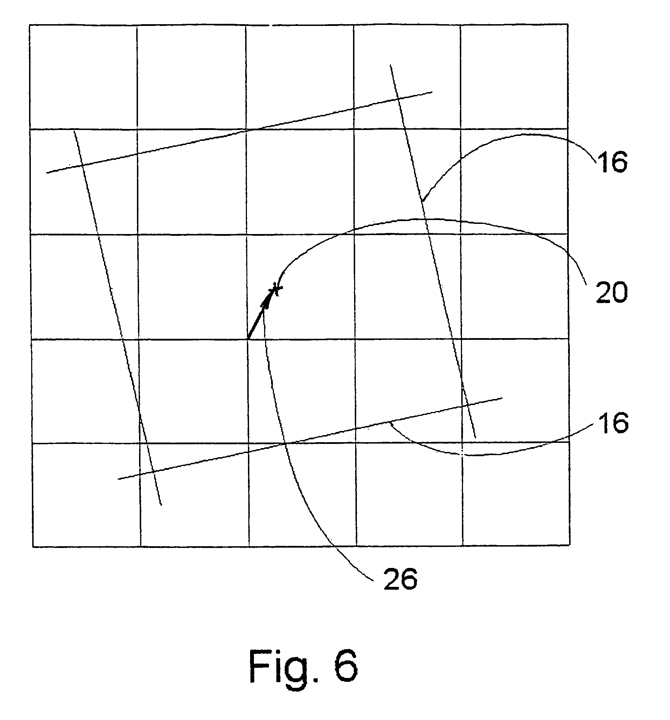

The quantization process seeks to place the center of the spot as close as possible to the cell center and to provide as compact a spot as possible (corresponding to as closely as possible to a circular or possibly other regularly shaped spot). The actual process is thus determined by the position of cell center 20 relative to the pixel grid. In one representation, the quantization is determined by a vector from the ideal center to the nearest pixel junction. This vector is referred to herein as a "quantization vector" 26 (see Fig. 6). Each cell has its own quantization vector. These vectors are quite small, less than 25 micrometers for an 800 dpi printer, but have dramatic effect on the screen quality. Note the quantization vectors are determined uniquely by the geometries of the cell grid and the pixel grid.

The following examples demonstrate the effects of the quantization vector:

Single spot

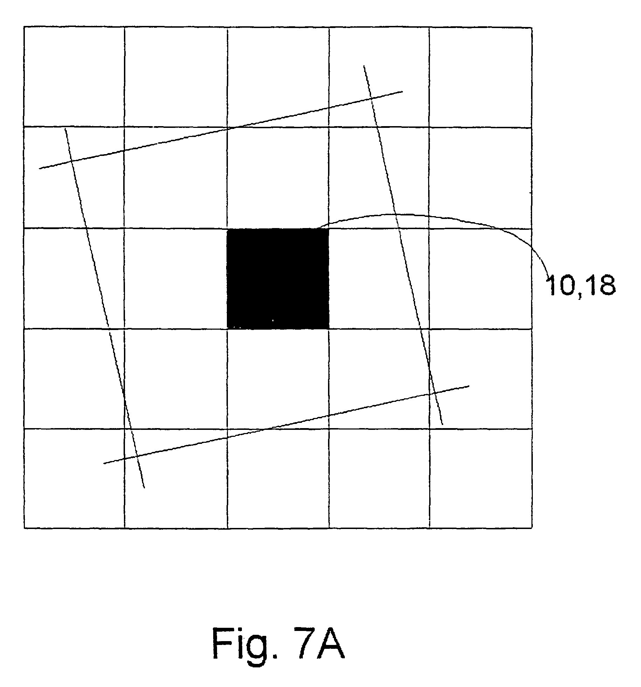

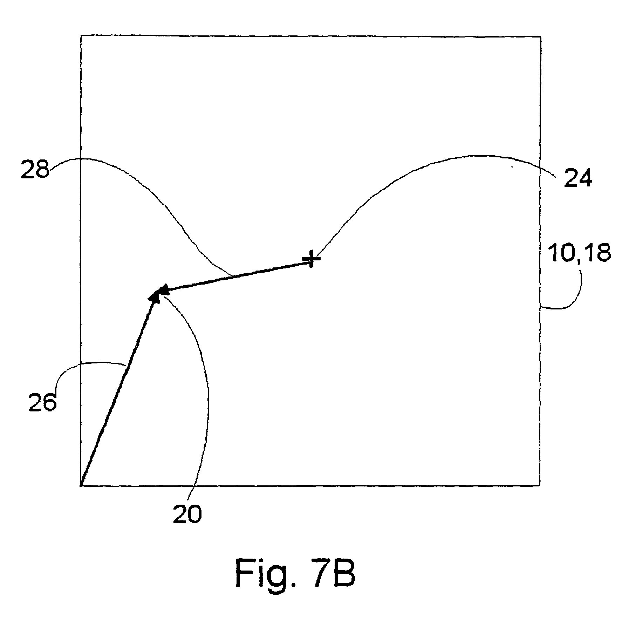

Referring to Fig. 7A, assume each spot has only one pixel (as in Fig. 4). Then it is reasonable to choose the closest pixel to the ideal center as the pixel to be printed. The vector difference between the cell center 20 and actual center 24 is given by an "error vector" 28 (Fig. 7B (which shows only the dark pixel of Fig. 7A), which shows the printed single pixel only), given as:

$$\mathrm{error} = \vec{q} - 0.5 * (a\hat{X} + b\hat{Y}),$$

where q is the quantization vector, a $\hat{X}$ and b $\hat{Y}$ are the pixel grid base vectors and 0.5 (a$\hat{X}$ + b$\hat{Y}$) is the position of the center of the single printed pixel. While the error can be minimized, it is generally neither zero nor even constant for different cells.

Two pixel spot

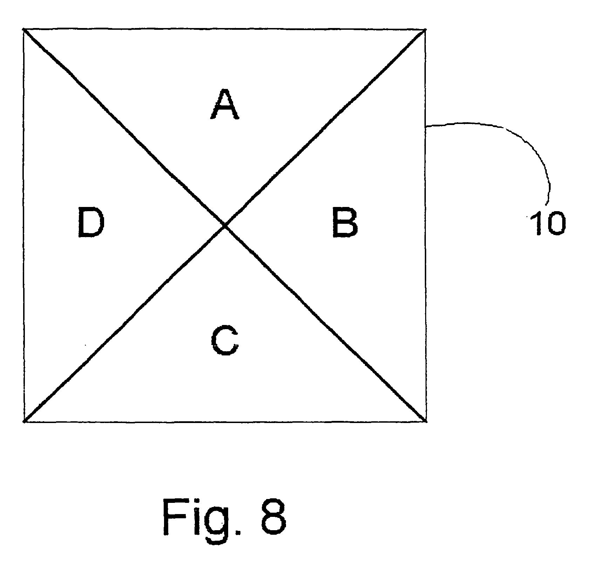

Assume that for a particular gray level, each spot has two pixels. Referring to Fig. 8, consider the pixel in which the cell center 20 is located. This pixel can be divided into four zones which are denoted by A, B, C and D. The cell center may fall in any one of these zones.

The first pixel of the spot is positioned in the same pixel as the pixel of the single pixel case. If the cell center falls in zone A then the reasonable choice for the second pixel to be printed is the pixel above, since this will place the center of weight of the spot as close to the cell center as possible. Similarly, if the cell center falls in zone B the reasonable choice for the second pixel to be printed is the pixel on the right; if the cell center falls in zone C the pixel below should be printed next; if the cell center falls in zone D the pixel to the left should be printed.

Thus for zones A, C we get a vertical spot, and for zones B, D we get a horizontal spot. So we see how the quantization vector determines the spot shape as well as its position.

**Quantization Frequencies**

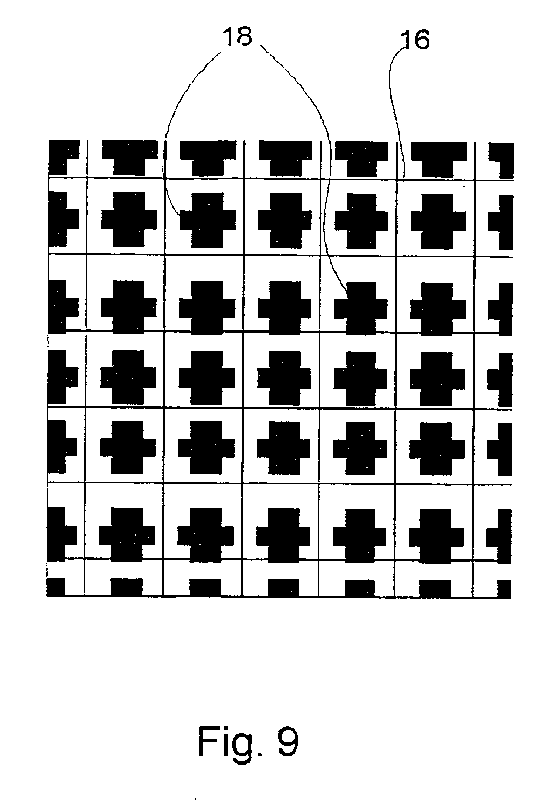

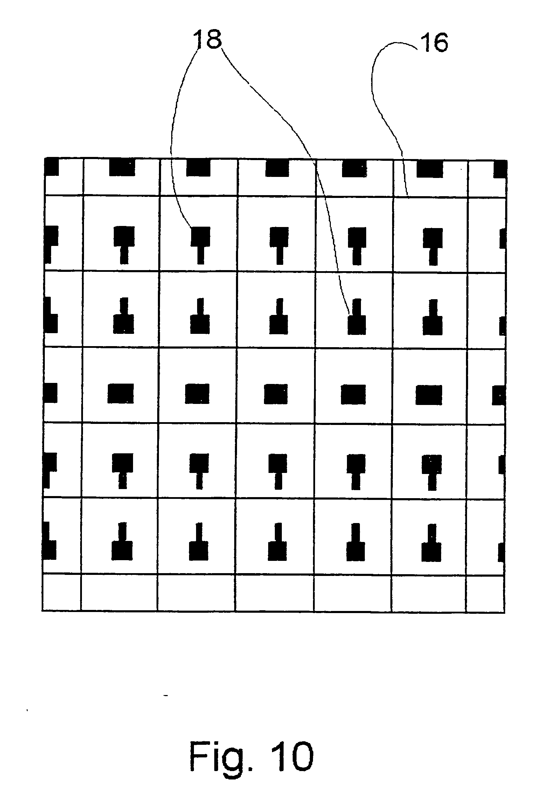

Figs. 9 and 10 show two different two dimensional screening patterns, (similar to a one dimensional case in that changes occur in only one direction. In both patterns the same cell grid and pixel grid geometries are used. In Fig. 9, the positions of the spots with respect to the cell centers changes periodically. However, the cell shape remains constant. In Fig. 10, which represents a different gray level than Fig. 9, there is a difference in both position (of the center of mass) of the spot with respect to the center of the cells and shape of the spot, although due to the shape of the spot, the change in position is less evident.

In both Figs. 9 and 10 the changes are periodic with the same frequency, termed herein as a "quantization frequency." This frequency does not depend on the gray level or on the quantization system used, but is only dependent on the cell and pixel geometries. It is noted that the quantization vectors and the frequency of the periodicity of the quantization vector are the same and that they are the same as that of the position and/or shape patterns. Thus, the quantization frequency translates into frequencies of variations in spot shape and position that are potentially visible and which may reduce the image quality.

For ease of understanding a simple example is presented, in which both grids are in the same direction and in the y direction, the cell dimension is not an integral multiple of the pixel dimension. While, in practice, much more complicated geometries are present, this geometry is chosen to illustrate the invention in a simple manner.

One case in which grid interference does not occur is for a so called "regular grid", in which the all the cell junctions correspond to pixel junctions (or at least have the same positional relationship for all the cells). In this case the quantization vector is either zero or the same for all the cells and the error is either zero or a constant. No periodic non-uniformities of the type described above will be present.

However, at least for multi-color screening, it is not possible to provide a regular grid for all the screens. Usually, more than one of the screens will not have a regular grid.

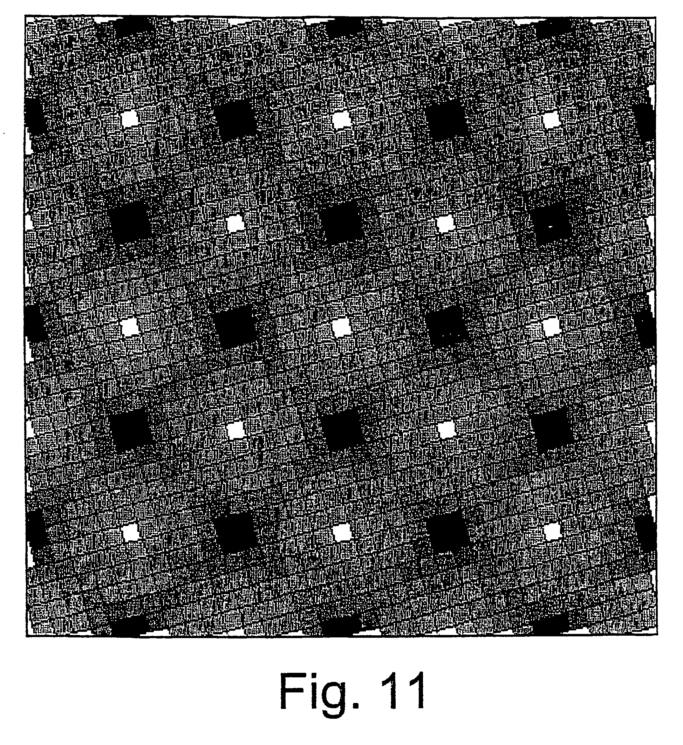

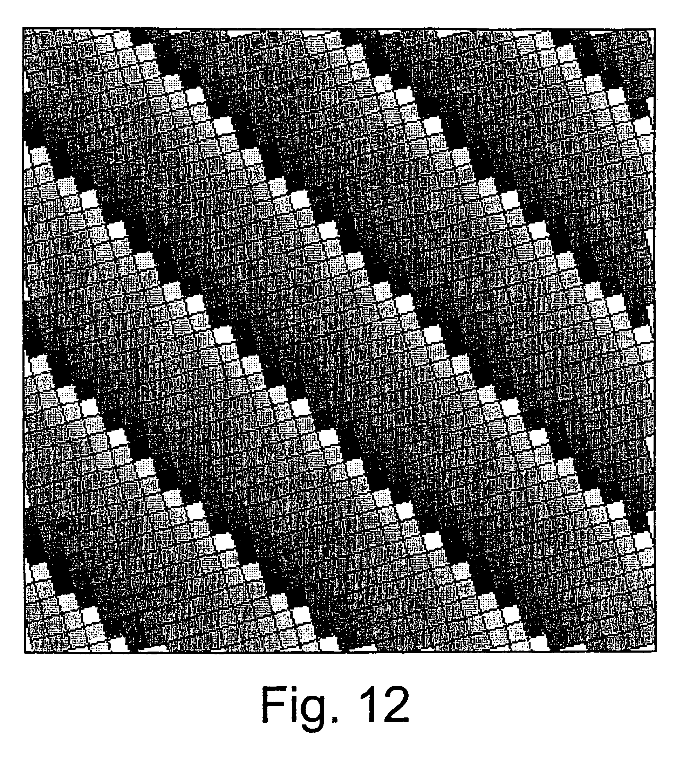

Fig. 11 shows a graphic representation of the variations of the norm of the quantization vectors as a function of positions of the cells, for a particular relationship between the cell and pixel geometries. The gray scale of the cells is proportional to the norm of the quantization vector. It should be noted that when an image was printed with this cell geometry and pixel geometry, a pattern similar to that shown in Fig. 11 results. Fig. 12 is a simplified version of the representation of Fig. 11 in which the gray scale is based on the valueof the "y" component of the quantization vector.

**Basic Concepts in Sampling Theory**

Before continuing, it is useful to develop several basic concepts in sampling theory.

### One dimensional sampling

Consider a signal h(x), where x is continuous. If this signal is sampled at a spacing "s", then the sampled signal is $h_m = h(m*x)$, where m is an integer. Let h(x) be represented as a Fourier series $h(x) = \sum_n A_n \bullet e^{i2\pi f_n x}$ .

According to a one-dimensional aliasing theorem, when a signal is sampled with a period "s", each frequencyin the signal is determined, by the samples, up to an addition factor of 1/s. By successive subtraction of 1/s in the frequency domain, we can place each frequency in the signal within a [-1/(2*s), 1/(2*s)] zone in frequency space. In other words, each frequency "f" can be replaced by (f)mod(1/s), where (a)mod(b) is the residue of a divided by b; a = m*b + (a)mod (b) and (a)mod(b) is in the range [-b/2,b/2]. Thus without loss of generality, all the frequencies of the sampled signal lie in the [-1/(2*s), 1/(2*s)] zone. This zone is referred to as the Brillouin zone, by analogy with the zone of the same name in solid state physics.

The sampled signal Fourier series can then be expressed as:

$$h_m = \sum_n A_n \bullet e^{i2\pi(f_n \bmod(1/s)x)} .$$

The continuous signal has frequencies $f_n$ and amplitudes $A_n$. The sampled signal has frequencies $f_n \bmod(1/s)$ and amplitudes $A_n$.

### Two dimensional sampling

Consider a two dimensional signal $h(\vec{u})$. $\vec{u} = (x,y)$ has continuous values in x and y. This signal is sampled by a discrete grid determined by the base vectors $\vec{V}_1, \vec{V}_2$ . Using this notation $\vec{u} = m_1 \vec{V}_1 + m_2 \vec{V}_2$ and $h_{m1,m2} = h(m_1 \vec{V}_1 + m_2 \vec{V}_2)$.

If the continuous signal is represented as a Fourier series, then $h(\vec{u}) = \sum_n A_n e^{i2\pi(\vec{f}_n \bullet \vec{u})}$ , where $\vec{f}_n$ • $\vec{u}$ is the scalar product of the vector frequency and $\vec{u}$.

Given a basis $\vec{V}_1, \vec{V}_2$ , for a two dimensional space, a dual basis $\vec{V}^1, \vec{V}^2$ can be defined such that $\vec{V}^\alpha \bullet \vec{V}_\beta = \delta^\alpha_\beta$ , , i.e., it is equal to 1 if $\alpha$ and $\beta$ are the same and 0 if they are different.

Any vector $\vec{w}$, can be represented in either space as w=$(\vec{w} \bullet \vec{V}_1) \vec{V}^1 + (\vec{w} \bullet \vec{V}_2)\vec{V}^2 = (\vec{w} \bullet \vec{V}^1) \vec{V}_1 + (\vec{w} \bullet \vec{V}^2)\vec{V}_2$.

According to a two dimensional aliasing theorem, when a two dimensional signal is sampled with a discrete grid, each frequency contained in the signal is determined, up to the addition of a vector from the dual grid. Similarly to the one dimensional case, one can subtract a vector in the dual grid and get an equivalent vector frequency. If the subtraction is made such that the remainder is a minimal vector, the result is a vector that is not only different in norm, but also different in orientation. By such subtraction the (reduced) frequency is within a parallelogram in the frequency space centered at the origin with edges formed by the dual basis. This parallelogram is the two dimensional Brillouin zone.

Placing the frequency vector in the Brilloun zone is carried out by the following formula:

$$\bar{f} = (\bar{f} \bullet \bar{V}_1)\bar{V}^1 + (\bar{f} \bullet \bar{V}_2)\bar{V}^2 \equiv \{(\bar{f} \bullet \bar{V}_1)\bmod 1\}\bar{V}^1 + \{(\bar{f} \bullet \bar{V}_2)\bmod 1\}\bar{V}^2 = \bar{f}\bmod(\bar{V}^1,\bar{V}^2),$$

where the last equality is a definition. The continuous signal has frequencies $\bar{f}_n$ , and amplitudes $A_n$. The sampled signal has frequencies $\bar{f}_n \bmod(\bar{V}^1, \bar{V}^2)$ and amplitudes $A_n$. It is noted that the amplitudes do not change.

**Finding the quantization frequencies**

The next step in the analysis is the finding of the quantization frequencies. As above, the one-dimensional case will be discussed first with the two dimensional case discussed later.

One dimensional quantization frequencies

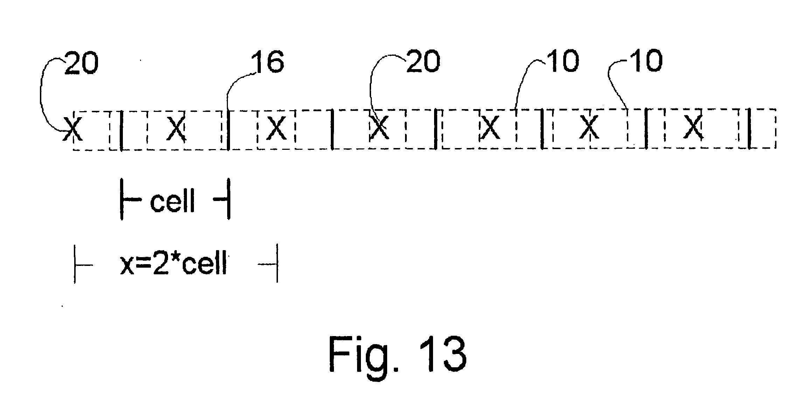

Fig. 13 shows the geometry for the one dimensional case. The dashed lines denote the pixels 10 while the solid lines denote the cells 16. The centers of the cells are denoted by Xs referenced by reference numbers 20. These are the same reference numbers used above for the same characteristics of two dimensional structures. For simplicity of notation the first cell center 20 lies on a pixel edge. This does not effect the generality of the result.

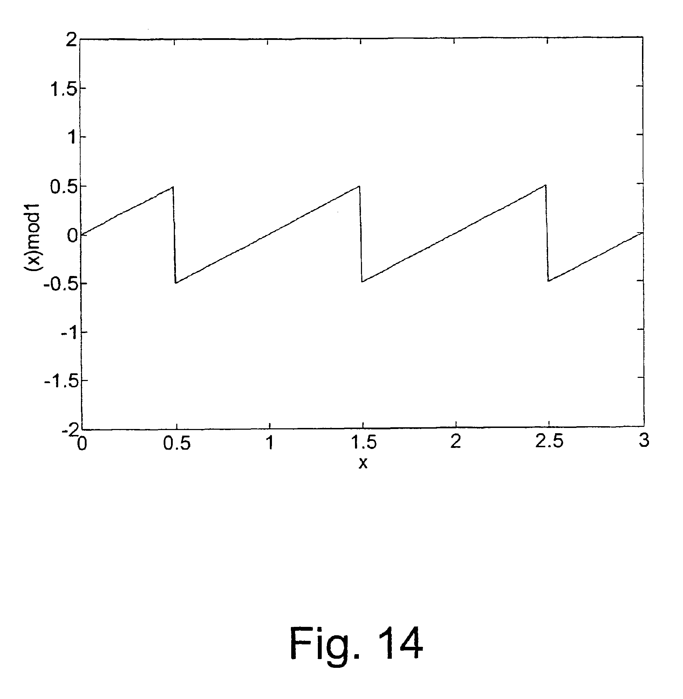

The positions of the cell centers are given by x=m•cell, for integer m. If "a" denotes the pixel extent, the quantization vector is given by $q_m$=(m•cell)mod a. The quantization vector signal can be viewed as a continuous signal sampled at the cell centers (i.e., with a frequency 1/cell). The corresponding continuous signal can be denoted by q(x) =(x)mod(a). This function has a sawtooth shape as shown in Fig. 14.

q(x) can be described as a Fourier series, viz: $q(x) = \sum_{n=\pm 1,\pm 2,\ldots} A_n e^{i2\pi f_n x}$ , where $f_n$=n/a and

$A_n = \dfrac{(-1)^n ia}{2\pi n}$ . Accordingly the sampled signal, i.e., the quantization signal will have the following frequencies:

$f_n \bmod(1/cell)=(n/a)\bmod(1/cell)$, with the amplitudes remaining unchanged.

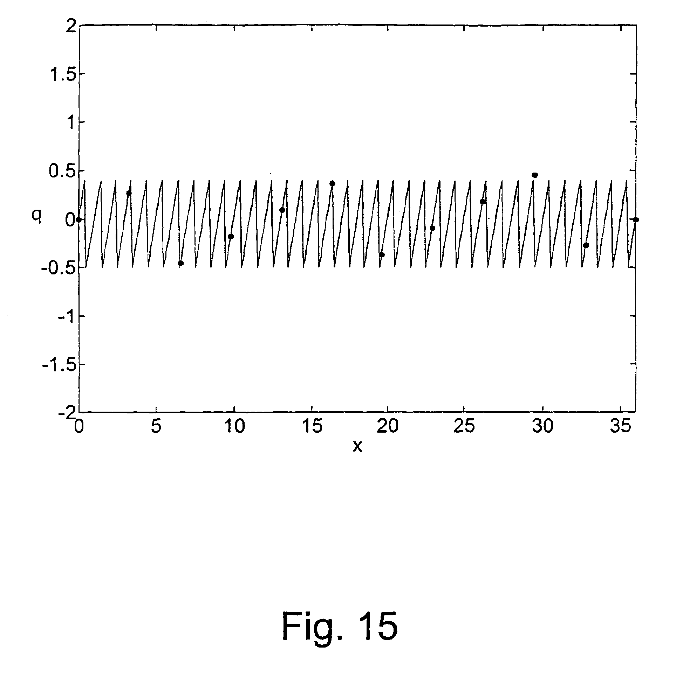

This result can be understood in the following way. The fundamental frequency is the pixel frequency 1/a. The quantization frequencies are the fundamental frequency and its harmonics, modulo the sampling frequency 1/cell. The amplitudes drop with harmonic number l/n. Fig. 15 shows that the quantization signal obtained from sampling the saw tooth signal q(x) is also a sawtooth pattern, with a reduced frequency. In Fig. 15, the marks on the continuous signal represent the sample points and are points in the quantization signal.

Two dimensional quantization frequencies

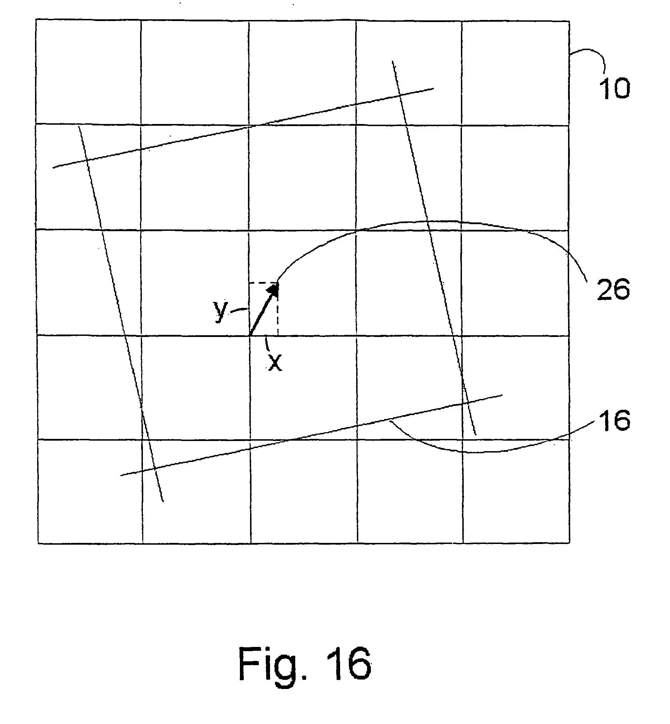

As shown in Fig. 16, the quantization vector has two components. The y component is computed in the following discussion. As in the one dimensional case, the first cell center lies on a pixel corner. This results in a phase shift for the frequency components but no loss of generality and no change in either the quantization frequencies or their amplitudes.

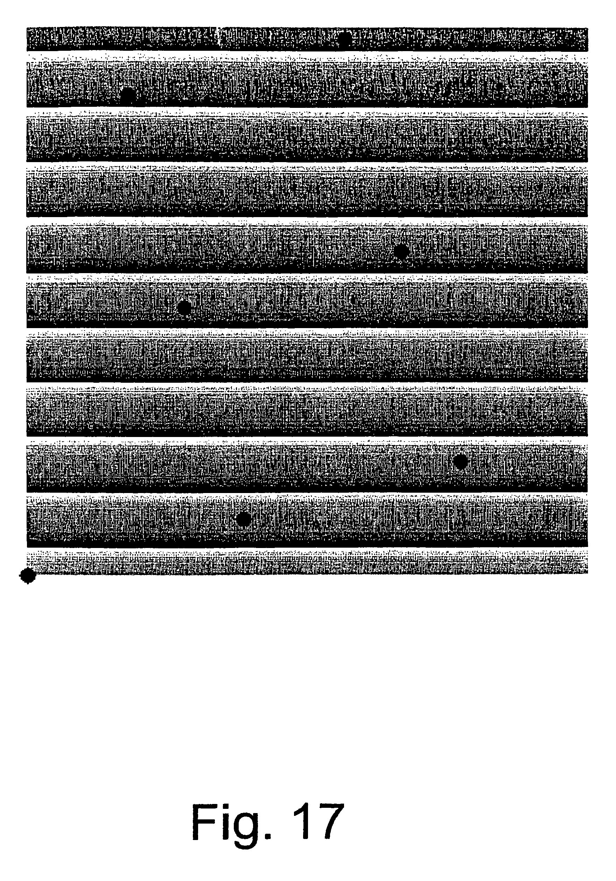

The cell centers are given by: $\vec{u} = m^1 \vec{V}_1 + m^2 \vec{V}_2$ , where $m^1$, $m^2$ are integers. The y component of the quantization vector is given by $\vec{q}_{(m1,m2)} \bullet \hat{Y} = \{(m^1\vec{V}_1 + m^2\vec{V}_2) \bullet \hat{Y}\}\bmod(a)$, where $\hat{Y}$ is the unit vector and a is the pixel size. As in the one dimensional case, this signal can be interpreted as a sampled signal of the continuous signal $q(\vec{u}) = (\vec{u} \bullet \hat{Y}) \bmod (a)$ , when it is sampled with a grid based on $\vec{V}_1$, $\vec{V}_2$. The graph of the continuous signal is shown in Fig. 17. The circular marks indicate sampling points. It is noted that this function is only the y component of the quantization. As indicated above, the quantization frequencies and amplitudes, can be derived utilizing the two dimensional sampling theory.

As in the one dimensional case, the continuous signal can be expressed as a Fourier series, viz:

$$q(\bar{u}) = \sum_{n=\pm1,\pm2,\ldots} A_n e^{i2\pi \vec{f}_n \bullet \bar{u}} \text{, where } \vec{f}_n = n\hat{Y}/a \text{ and } A_n = \frac{(-1)^n ia}{2\pi n}.$$

The sampled signal has the same amplitudes and its frequencies can be expressed as

$$\vec{f}_n \bmod(\bar{V}^1, \bar{V}^2) = (n\bar{Y}/a)\bmod(\bar{V}^1, \bar{V}^2) = \{((n\bar{Y}/a)\bullet \bar{V}_1)\bmod 1\}\bar{V}^1 + \{((n\bar{Y}/a)\bullet \bar{V}_2)\bmod 1\}\bar{V}^2$$

The x component can be determined in the same way.

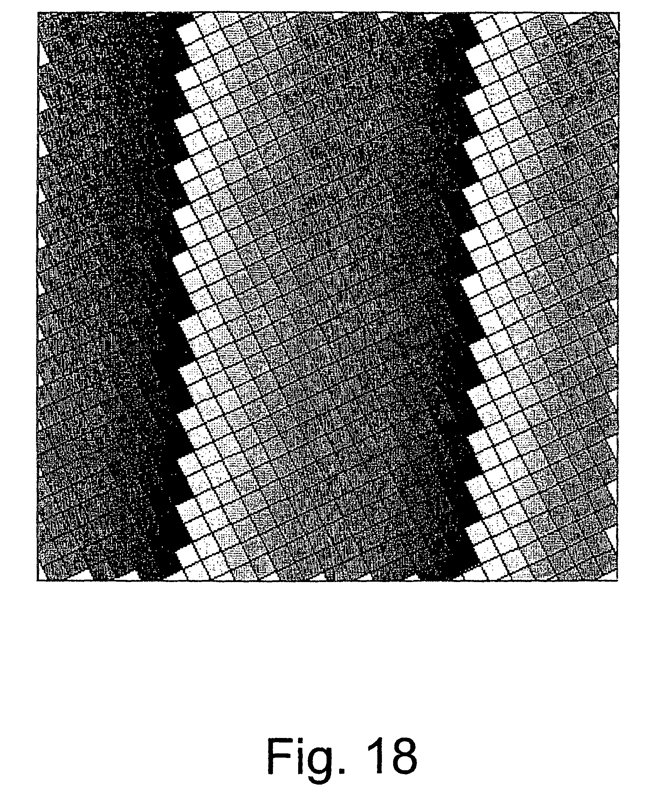

As in the one dimensional case, the fundamental frequency and its harmonics (modulo the dual basis) are determined. An important difference between the one and two dimensional cases is that the modulo operation is different, with the aliasing effect being different. In the one dimensional case the aliasing causes reduction in frequency, in the two dimensional case the aliasing also cause the change in the orientation of the frequency vector (of course, such a change has no meaning in the one dimensional case). This effect can be seen in Fig. 18. The vector frequencies of the continuous signal are in the y direction, thus the wave fronts are horizontal lines. After the sampling, frequencies in the x direction appear. In the present case, the aliasing causes a 90° rotation of the frequency vector.

Another example of a rotation of the quantization frequency is shown in Fig. 12, in which a 45° rotation was generated.

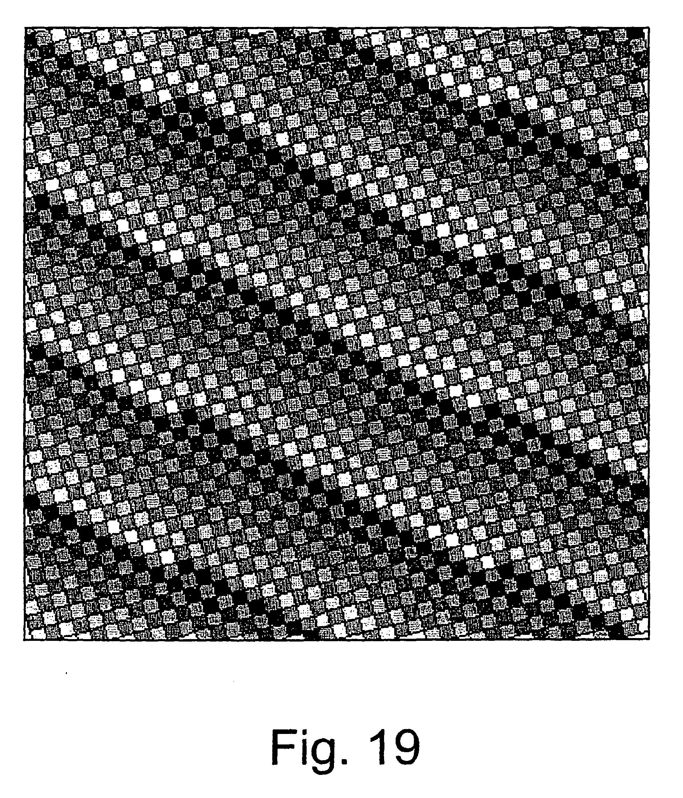

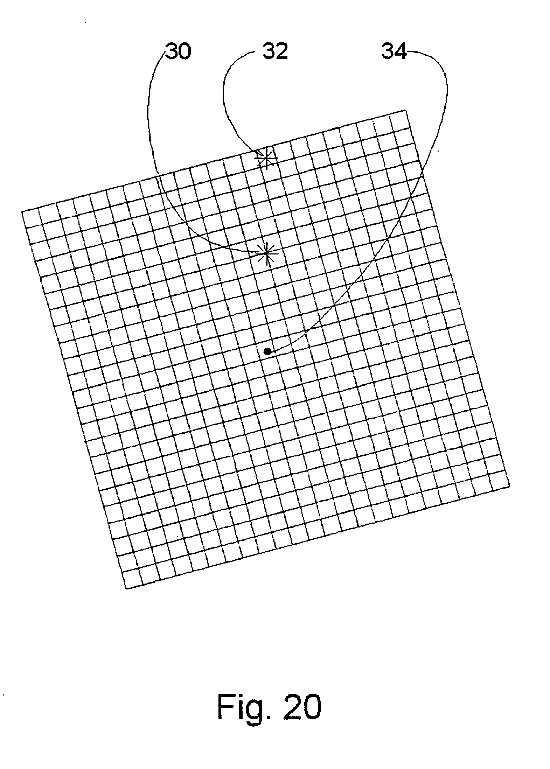

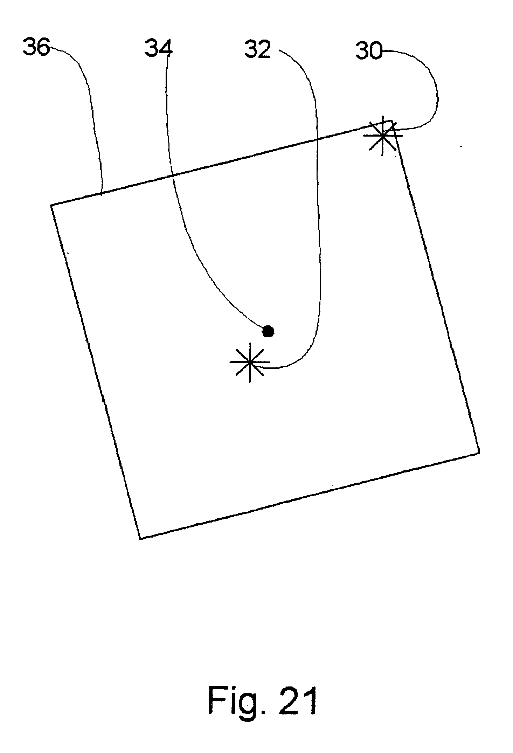

In the above examples only the fundamental frequency was considered. Often, however, it is the harmonics that are responsible for a disturbing pattern. Due to aliasing, harmonics can have lower frequencies than the fundamental, making them more visible. Fig. 19 shows an example of a situation in which the fundamental frequency causes a small checkerboard pattern and the harmonic causes the broad diagonal bands. The high frequency fundamental is not noticed by a viewer; the broad lines are very disturbing. Fig. 20 shows the fundamental 30 and the harmonic 32 in frequency space. The grid shown is the dual grid, formed by the dual basis vectors. The frequency origin is at the center of the pixel grid. Fig. 21 shows fundamental 30 and harmonic 31 in Brillouin zone 36 (modulo frequency). The zero frequency is shown at 34. It is seen that the harmonic has a lower frequency in the Brillouin zone than does the fundamental.

### Effect of pixel geometry

In the previous section both the x and the y components of the quantization vector were analyzed. If the pixel is much longer in the y direction than in the x direction (as it is in printers using pulse width modulation(PWM)), it is sufficient to analyze only the y component, since the x component is much smaller than the y component. For a square pixel, used in many printers, the inventors have found that the norm of the quantization vector is preferably analyzed, rather than its components. Fig. 11 shows a display of an r signal, representing the norm. As in the above examples, the r signal is sampled by the cell. Assuming the same nomenclature as in the previous examples, the amplitude of the Fourier components are:

$$A_{n_1,n_2} = \iint_{\text{pixel}} r(\bar{u})e^{-i2\pi \vec{f}_{n_1,n_2} \bullet \bar{u}} d^2u,$$

where the frequencies are

$$\vec{f}_{n_1,n_2} = (n_1/a)\hat{X} + (n_2/a)\hat{Y}.$$

The integral is most easily solved numerically. Our interest is in the frequencies and amplitudes of the sampled signal. When moving from the continuous signal to the sampled signal the frequencies are simply taken modulo the dual basis and the amplitudes are unchanged. This allows calculation of the amplitudes and frequencies of the r signal. Note that for each frequency vector there is a corresponding frequency vector rotated by 90° with the same amplitude. This is the reason for the "net" pattern in Fig. 11.

Generalization to oblique pixel grid and to signals that are a function of the quantization vector

Using similar analysis the values of the amplitude and frequency of any signal that is a function of the quantization vector can be found. The result follows:

$$A_{n_1,n_2} = (1/s) \iint_{pixel} g(\bar{u})e^{-2\pi i f_{n_1,n_2} \bullet \bar{u}} d^2 u,$$

and

$$\bar{f}_{n_1,n_2} \bmod(\bar{V}^1, \bar{V}^2) = (n_1\bar{a}^1 + n_2\bar{a}^2)\bmod(\bar{V}^1, \bar{V}^2) = \sum_{\alpha,\beta=1}^{2} \{(n_\alpha \bar{a}^\alpha \bullet \bar{V}_\beta)\bmod 1\}\bar{V}^\beta.$$

This is a general formula for quantization frequencies and amplitudes associated with a signal g (note that only the amplitudes are functions of g, the frequencies are independent of g). "s" is the pixel area and $a^1$ and $a^2$ are the dual basis to the pixel grid basis.

**Utility of the frequency analysis**

The above formulas are very successful in predicting patterns seen in print. They predict both frequency (size and direction), and the relative dominance of these frequencies according to the relative amplitude.
As already mentioned, when using PWM, analyzing the 'y' signal is sufficient, otherwise it is recommended to use the 'r' signal.
This **embodiment** uses only the geometry of the screen (that is the geometry of the cell grid and the geometry of the pixel grid). The specific way the screen was constructed is not a factor in the computation. For example, the shape of the spots is not relevant to the computation. Experiments indeed show that applying different screening techniques to the same screen geometry yield the same kind of patterns corresponding to the predicted quantization frequencies. Different screening techniques may reinforce or reduce the effect of quantization frequencies, the quantization frequencies wight appear in different gray levels, but they are nevertheless present due to the common geometry.
The above analysis is applicable to any rational or irrational grid based screen. Screens for which the tangent of the grid angle is an irrational number are known as irrational. Most matrix based screens are rational (i.e., the pattern repeats). As indicated above, the cell grid need not be square, it can be any oblique grid. The same for the pixel grid.

Filtering

In general, it is desirable that the non-zero quantization frequencies to be as high as possible. This is based on two reasons:

1. Higher frequencies are less noticeable to the eye.
2. Higher frequencies will have fewer samples per period, making the pattern less noticeable.

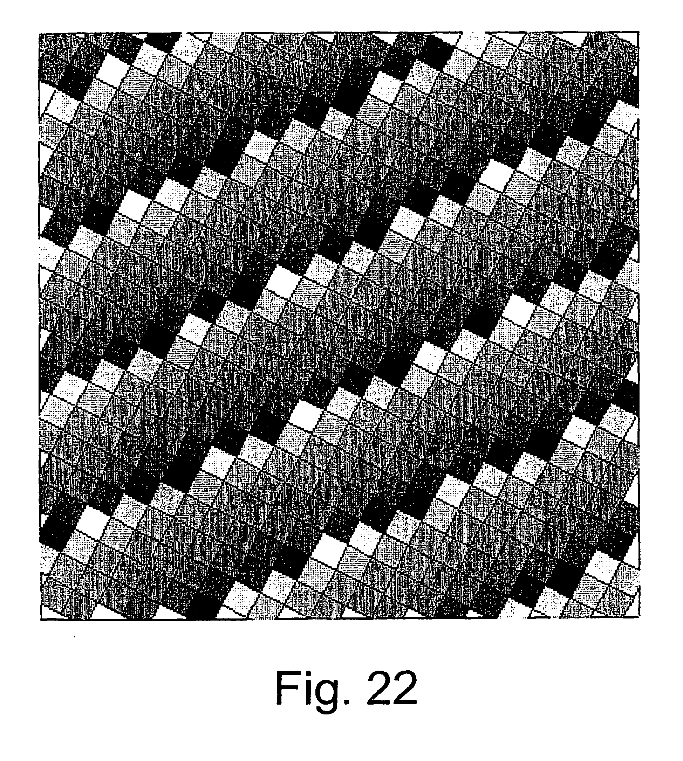

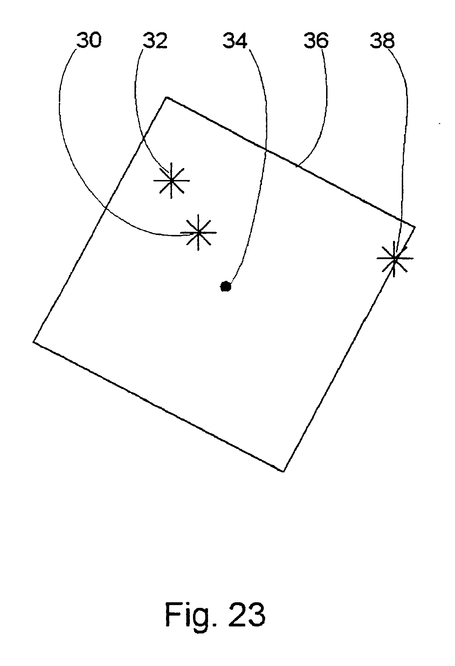

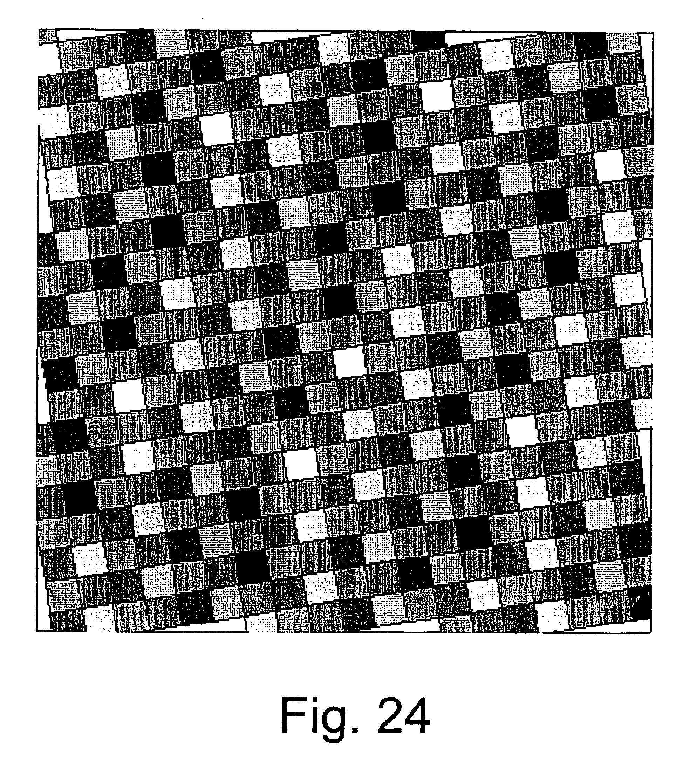

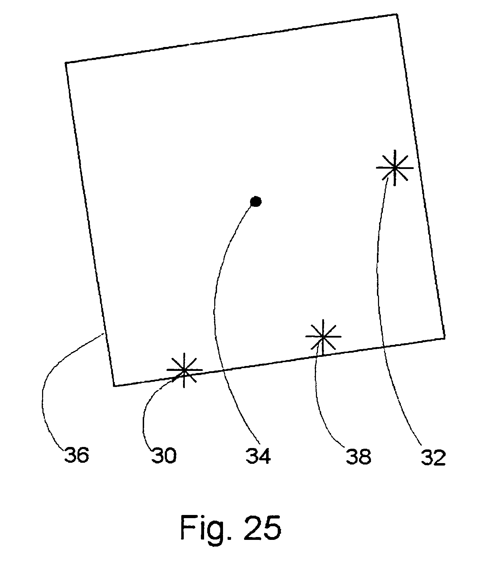

If, for example, the frequency lies close to the Brillouin zone edge, then each period is sampled only twice, and the periodicity is hard to detect.
Reference is made to Figs. 22 and 23. Fig. 22 (y signal), with its diagonal bands, clearly represents an undesirable geometry. Fig. 23, which shows the modulo frequencies in the Brillion zone, shows that the fundamental is close to the origin, explains why this is the case. The same notation used in Fig. 21, except that the second harmonic is indicated by reference numeral 38.
Reference is made to Figs. 24 and 25 (y signal). No dominant low frequency is seen in Fig. 24; this is a good geometry. Fig. 25 indicates why this is so. All three dominant frequencies (i.e. frequencies with highest amplitudes) of the 'y' signal are high (i.e. close to the Brillouin zone edge, and far away from the origin).
It is desirable to construct a filter to keep the good geometries and reject the bad ones. Low frequencies should be avoided. In a preferred embodiment of the invention, for each Fourier component a lower bound is established for the frequency. Geometries that give lower frequencies are preferably rejected.

In preferred embodiments of the invention, the frequency bound is a function of the amplitude of the particular Fourier component. Fourier components with lower amplitudes may have lower frequency bounds, i.e., they are allowed to have lower frequencies.

In a preferred embodiment of the invention, the following algorithm is used to determine acceptable geometries and to reject troublesome geometries:

1. Choose a pixel grid geometry.
2. Decide which signal to analyze (recommended: 'y' signal for PWM, 'r' signal otherwise).
3. Calculate the Fourier transform of the continuos signal according to the formulas given.
4. Order the Fourier components according to their amplitude.
5. Give a separate lower bound on the frequency of each Fourier component.
6. Choose a candidate cell grid geometry.
7. Calculate the frequencies of the sampled signal, i.e. take the above frequencies modulo the dual basis.
8. Check if the frequencies of the sampled signal are above the corresponding lower bounds (as long as they are non-zero frequencies). If all the frequencies are above the lower limits, the geometry passed the filter, otherwise it failed.

Note that the first five steps are not dependent on the cell geometry and need be performed only once. The last three steps are dependent on the cell geometry and are performed separately for each cell geometry, but can be done ahead of time for many cell geometries, and stored.

Note that since the signals are real (not complex), the Fourier component will come in pairs. The Fourier component associated with some quantization frequency is the complex conjugate of the Fourier component associated with the opposite frequency. Only one frequency of a pair (for example those in the upper half plane of the frequency space) need be analyzed.

In practice only the N dominant Fourier components need be checked. The number of Fourier components checked, and the lower bounds associated, can be determined by experience (since they are affected by the printer resolution, by the line ruling, and by the quality expectations). To save time it is advised to use also the display method presented earlier, to help the user decide if he accepts the screen, rather than performing a large number of experiments on actual prints.

As an example, satisfactory lower bounds for a 175 lpi screen for an 800* 1600 dpi printer were determined for the three dominant frequencies of the 'y' signal (i.e. the fundamental frequency with the first 2 harmonies, n=1,2,3). The lower bounds determined were:

1. 70 lpi for the fundamental frequency.
2. 50 lpi for the first harmonic.
3. 17.5 lpi for the second harmonic.

More generally, the following rules of thumb have been found to or are believed to give good results:

A. For Pulse Width Modulation (PMW) in which only the y component of the quantization vector is important (as indicated above), then the fundamental frequency is preferably higher than 0.7B, more preferably higher than 0.8B and most preferably higher than 0.9 B, where 2B is the total extent of the Brillouin zone (i.e., B is at the edge of the zone). The first harmonic is preferably higher than 0.5B, more preferably higher than 0.6 B or 0.7B and most preferably higher than 0.8B. The second harmonic is preferably higher than 0.2 B, more preferably higher than 0.3B, 0.4B or 0.5B and most preferably higher than 0.6B. Of course, it is most preferably that the fundamental frequency and all of the harmonics be as close to the boundary of the Brillouin as possible.

B. For systems without PWM (for example, square pixels), for each frequency designated by $(n_1,n_2)$, the r signal for $\pm n1,2$ are equivalent. A reasonable value for frequency for a separation would then be:

For $(n_1,n_2)=(\pm1,0), (0,\pm1)$, preferably higher then 0.7, more preferably higher than 0.8 and most preferably higher than 0.9.

For $(n_1, n_2)=(\pm2,0), (0,\pm2)$, preferably higher then 0.5, more preferably higher than 0.6 or 0.7 and most preferably higher than 0.8.

For $(n_1,n_2)=(\pm3,0), (0,\pm3), (\pm1, \pm1)$ preferably higher then 0.2, more preferably higher than 0.3, 0.4 or 0.5 and most preferably higher than 0.6.

For $(n_1,n_2)=(\pm1, \pm2), (\pm2,\pm1)$, preferably higher then 0.2, more preferably higher than 0.3 or 0.4 and most preferably higher than 0.5.

Of course, it is preferable that all the listed harmonics meet these requirements.

Screen Machine Interference

The same approach can be used to study a screen/machine interference in single separation. Printers often have some natural frequencies, which produce some periodic non-uniformity. These machine frequencies are often in the process direction. A common example is laser printers, which uses an array of lasers. As can be expected, different beams have slightly different power, so each line is exposed with different intensity. This means the laser printer has a natural frequency, the period is the size of the laser array.

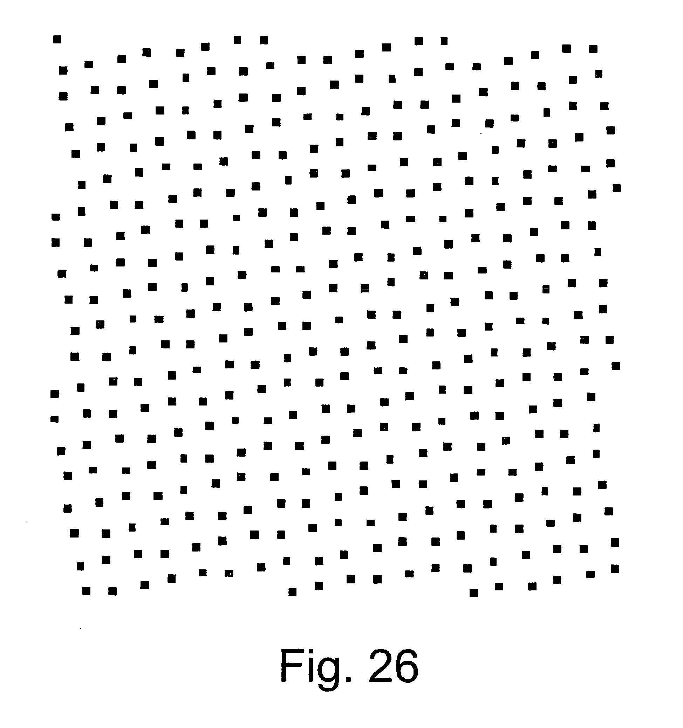

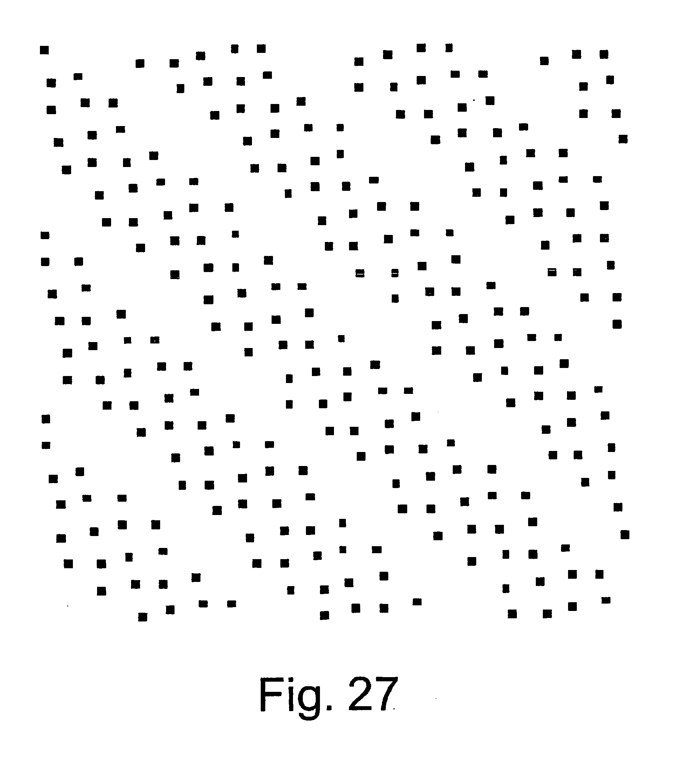

These machine frequencies can interfere with the screen producing entirely different frequencies. Figs. 26 and 27 show an example, in which an array of four laser beams sweeps the photoreceptor. It is desired to print a pixel in each spot, as shown in Fig. 26. But suppose one of the four laser beams is off; some of the pixels are not printed, and the pattern seen in Fig. 27 results.

The method developed for predicting the patterns resulting from grid interference can used for predicting patterns resulting from screen/machine interference. To obtain the frequencies of the screen/machine interference we simply take the machine frequency and its harmonies modulo the dual basis. The amplitudes drop as 1/n. Note the effect of the screen on the machine frequency is introduced by the sampling, which causes aliasing. Similar filtering methods can determine those screens which are less prone to cause objectionable interference with the machine variations.

Actually, the frequencies of the y signal can be interpreted as a special case of the screen/machine interference, where the machine natural frequency is the pixel frequency.

It will be appreciated that the above described methods may be varied in many ways, including, changing the order of steps, combining steps from the different methods, omitting steps and adding steps.

The present invention has been described using non-limiting detailed descriptions of preferred embodiments thereof that are provided by way of example and are not intended to limit the scope of the invention. Variations of embodiments described will readily occur to persons of the art. Furthermore, the terms "comprise," "include," "have" and their conjugates, shall mean, when used in the claims, "including but not necessarily limited to." The scope of the invention is limited only by the following claims:

**Claims**

1. A method of determining acceptability of a screening geometry comprising a cell grid (14) geometry and a pixel grid (12) geometry, which do not define a regular grid, **characterized by**
   determining at least one characteristic self-interference frequency generated by interference of the cell and pixel grids (14, 12) due to non-uniformity of a relationship between the cell centers and the centers of the pixels in the cells; and
   accepting the screening geometry if the at least one characteristic frequency is greater than a given value.

2. A method according to claim 1 wherein the at least one frequency comprises a plurality of frequencies.

3. A method according to claim 2 wherein the given value varies depending on a harmonic number of the frequency.

4. A method according to claim 2 or claim 3 wherein the given value is higher for self interference frequencies having a higher characteristic amplitude.

5. A method according to any of the preceding claims wherein
   the pixel grid (12) geometry, is **characterized by** a pixel (10) repeat; and
   the cell grid (14) geometry, is **characterized by** a cell (16) repeat and angle between the cell grid (14) and the pixel grid (12).

6. A method according to claim 5 wherein an image is to be printed with the screen using pulse width modulation of a writing beam.

7. A method according to claim 6, wherein a fundamental self interference frequency (30) of the y component of a set of quantization vectors (26) of said geometry has a given fundamental value greater than 0.7B, where the frequency compared to the given value is $|f \bmod(V^1, V^2)|$, where $(V^1, V^2)$ are Basis vectors of a dual grid of the cell grid (14), 2B is the width of a Brillouin zone defined as (1/C) and C is the cell (16) repeat.

**8.** A method according to claim 7 wherein the given fundamental value is greater than 0.8B.

**9.** A method according to claim 7 wherein the given fundamental value is greater than 0.9B.

**10.** A method according to any of claims 6-9 wherein a first harmonic self interference frequency (32) of the y component of a set of quantization vectors (26) of said geometry has a given first harmonic value greater than 0.5B, where the frequency compared to the given value is $|f\text{mod}(V^1,V^2)|$, where $(V^1,V^2)$ are basis vectors of a dual grid of the cell grid (14), 2B is the width of a Brillouin zone defined as (1/C) and C is the cell (16) repeat.

**11.** A method according to claim 10 wherein the given first harmonic value is greater than 0.7B.

**12.** A method according to claim 10 wherein the given first harmonic value is greater than 0.8B.

**13.** A method according to any of claims 6-12, wherein a second harmonic self interference frequency (38) of the y component of a set of quantization vectors (26) of said geometry has a second harmonic given value greater than 0.2B, where the frequency compared to the given value is $|f\,\text{mod}(V^1,V^2)|$, where $(V^1,V^2)$ are basis vectors of a dual grid of the cell grid (14), 2B is the width of a Brillouin zone defined as (1/C) and C is the cell (16) repeat.

**14.** A method according to claim 13 wherein the second harmonic given value is greater than 0.3B.

**15.** A method according to claim 13 wherein the second harmonic given value is greater than 0.5B.

**16.** A method according to any of claims 7-15 wherein the function is a function of the error vector, the vector being defined as the vector from the Center (20) of the cell (16) to the nearest pixel (10) junction.

**17.** A method according to claim 5 wherein an image is to be printed with the screen using a fixed written pixel (10) size.

**18.** A method according to claim 17 wherein a self interference frequency, **characterized by** an x,y frequency pair $(\pm 1,0)$ or $(0,\pm 1)$ of a set of quantization vectors (26) of said geometry, has a first given value greater than 0.7B, where the frequency compared to the given value is $|f\text{mod}(V^1, V^2)|$, where $(V^1,V^2)$ are basis vectors of a dual grid of the cell grid (14), 2B is the width of a Brillouin zone defined as (1/C) and C is the cell (16) repeat.

**19.** A method according to claim 18, wherein the first given value is greater than 0.8B.

**20.** A method according to claim 18 wherein the first given value is greater than 0.9B.

**21.** A method according to any of claims 17-20, wherein a self interference frequency, **characterized by** an x,y frequency pair $(\pm 2,0)$ or $(0,\pm 2)$ of a set of quantization vectors (26) of said geometry, has a second given value greater than 0.5B, where the frequency compared to the given value is $|f\,\text{mod}(V^1,V^2)|$, where $(V^1,V^2)$ are basis vectors of a dual grid of the cell grid (14), 2B is the width of a Brillouin zone defined as (1/C) and C is the cell (16) repeat.

**22.** A method according to claim 21 wherein the second given value is greater than 0.6B.

**23.** A method according to claim 21 wherein the second given value is greater than 0.8B.

**24.** A method according to any of claims 17-23 wherein a self interference frequency, **characterized by** an x,y frequency pair $(\pm 3,0)$ or $(0,\pm 3)$ of a set of quantization vectors (26) of said geometry, has a third given value greater than 0.2B, where the frequency compared to the given value is $|f\,\text{mod}(V^1, V^2)|$, where $(V^1,V^2)$ are basis vectors of a dual grid of the cell grid (14), 2B is the width of a Brillouin zone defined as (1/C) and C is the cell (16) repeat.

**25.** A method according to claim 24 wherein the third given value is greater than 0.3B.

**26.** A method according to claim 24 wherein the third given value is greater than 0.5B.

**27.** A method according to any of claims 17-26, wherein a self interference frequency, **characterized by** an x,y frequency pair $(\pm 1,\pm 1)$ of a set of quantization vectors (26) of said geometry, has a fourth given value greater than 0.2B, where the frequency compared to the given value is $|f\,\text{mod}(V^1,V^2)|$, where $(V^1,V^2)$ are basis vectors of a dual grid of the cell grid (14), 2B is the width of a Brillouin zone defined as (1/C) and C is the cell (16) repeat.

**28.** A method according to claim 27 wherein the fourth given value is greater than 0.3B.

**29.** A method according to claim 27 wherein the fourth given value is greater than 0.5B.

**30.** A method according to any of claims 17-29 wherein a self interference frequency, of a set of quantization vectors (26) of said geometry, **characterized by** an x,y frequency pair $(\pm 1, \pm 2)$ or $(\pm 2, \pm 1)$ has a fifth given value greater than 0.2B, where the frequency compared to the given value is $|f \bmod(V^1, V^2)|$, where $(V^1, V^2)$ are basis vectors of a dual grid of the cell grid (14), 2B is the width of a Brillouin zone defined as (1/C) and C is the cell (16) repeat.

**31.** A method according to claim 30 wherein the fifth given value is greater than 0.3B.

**32.** A method according to claim 30 wherein the fifth given value is greater than 0.5B.

**33.** A method according to any of claims 18-32 wherein the quantization vectors (26) are error vectors, the error vectors being defined as vectors from the center (20) of cells (16) to the nearest pixel (10) junction.

**34.** A method according to any of the preceding claims wherein the given value is independent of an image to which the screen is to be applied.

**35.** A separation printed with a screen having a non-regular grid and having pixels (10) on a pixel grid (12) having a pixel (10) repeat and cells (16) on a cell grid (14) having a cell (16) repeat and an angle with the pixel grid (12), using pulse width modulation of a writing beam, wherein a self-interference frequency being generated by interference of the cell and pixel grids (14, 12) due to non-uniformity of the relationship between the cell centers and the centers of the pixels in the cells, wherein the self interference frequency of the y component of a set of quantization vectors (26) of said geometry has a first given value greater than • B, where the frequency compared to the given value is $|f \bmod(V^1, V^2)|$, where $(V^1, V^2)$ are basis vectors of a dual grid of the cell grid (14), 2B is the width of a Brillouin zone defined as (1/C) and C is the cell (16) repeat and wherein the separation meets one or more of the following criteria:

(a) the interference frequency is the fundamental self interference frequency (30) of the y component of the set and wherein •is 0.7;
(b) the interference frequency is the first harmonic self interference frequency (32) of the y component of the set and wherein •is 0.5;
(c) the interference frequency is the second harmonic self interference frequency (38) of the y component of the set and wherein •is 0.2;

**36.** A separation according to claim 35 wherein at least criteria (a) is met.

**37.** A separation according to claim 35 wherein • for criteria (a) is greater than 0.8.

**38.** A separation according to claim 35 wherein • for criteria (a) is greater than 0.9.

**39.** A separation according to any of claims 35-38 wherein at least criteria (b) is met.

**40.** A separation according to claim 39 wherein for criteria (b) is greater than 0.7.

**41.** A separation according to claim 39 wherein • for criteria (b) is greater than 0.8.

**42.** A separation according to any of claims 35-41 wherein at least criteria (c) is met.

**43.** A separation according to claim 42 wherein • for criteria (c) is greater than 0.3.

**44.** A separation according to claim 42 wherein • for criteria (c) is greater than 0.5.

**45.** A separation according to any of claims 35-44 wherein the quantization vectors (26) are error vectors, the error vectors being defined as vectors from the center (20) of cells (16) to the nearest pixel (10) junction.

**46.** A separation printed with a screen having a non-regular grid and having pixels (10) on a pixel grid (12) having a pixel (10) repeat and cells (16) on a cell grid (14) having a cell (16) repeat and an angle with the pixel grid (12), wherein a self-interference frequency being generated by interference of the cell and pixel grids (14, 12) due to non-uniformity of the relationship between the cell centers and the centers of the pixels in the cells, wherein the self interference frequency of a set of quantization vectors (26) of said geometry has a first given value greater than • B, where the frequency compared to the given value is $|f\text{mod}(V^1,V^2)|$, where $(V^1,V^2)$ are Basis vectors of a dual grid of the cell grid (14), 2B is the width of a Brillouin zone defined as (1/C) and C is the cell (16) repeat and wherein the separation meets c or more of the following criteria:

(a) the interference frequency is a self interference frequency of the an (x,y) frequency pair ($\pm$1,0) or (0,$\pm$1) of the set and wherein • is 0.7

(b) the interference frequency is a self interference frequency of the an (x,y) frequency pair ($\pm$2,0) or (0,$\pm$2) of the set and wherein • is 0.5;

(c) the interference frequency is a self interference frequency of an (x,y) frequency pair ($\pm$3,0) or (0,$\pm$3) of the set and wherein • is 0.2;

(d) the interference frequency is a self interference frequency of an (x,y) frequency pair ($\pm$1,$\pm$1) of the set and wherein • is 0.2;

(e) the interference frequency is a self interference frequency of an (x,y) frequency pair ($\pm$1,$\pm$2) or ($\pm$2, $\pm$1) of the set and wherein • is 0.2.

47. A separation according to claim 46 wherein at least criteria (a) is met.

48. A separation according to claim 47 wherein • for criteria (a) is greater than 0.8.

49. A separation according to claim 47 wherein • for criteria (a) is greater than 0.9.

50. A separation according to any of claims 46-49 wherein at least criteria (b) is met.

51. A separation according to claim 50 wherein • for criteria (b) is greater than 0.7.

52. A separation according to claim 50 wherein • for criteria (b) is greater than 0.8.

53. A separation according to any of claims 46-52 wherein at least criteria (c) is met.

54. A separation according to claim 53 wherein • for criteria (c) is greater than 0.3.

55. A separation according to claim 53 wherein • for criteria (c) is greater than 0.5.

56. A separation according to any of claims 46-55 wherein • at least criteria (d) is met.

57. A separation according to claim 55 wherein • for criteria (d) is greater than 0.3.

58. A separation according to claim 55 wherein • for criteria (d) is greater than 0.5.

59. A separation according to any of claims 46-58 wherein at least criteria (e) is met.

60. A separation according to claim 59 wherein • for criteria (e) is greater than 0.3.

61. A separation according to claim 55 wherein • for criteria (e) is greater than 0.5.

62. A separation according to any of claims 46-61 wherein the quantization vectors (26) are error vectors, the error vectors being defined as vectors from the center (20) of cells (16) to the nearest pixel (10) junction.

63. A screen printed image in which at least two separations are printed in accordance with any of claims 35-62.

64. A screen printed image in which at least three separations are printed in accordance with any of claims 35-62.

**EP 1 256 230 B1**

**Patentansprüche**

1. Ein Verfahren zum Bestimmen einer Annehmbarkeit einer Rasterungsgeometrie, die eine Geometrie eines Zellengitters (14) und eine Geometrie eines Pixelgitters (12) aufweist, die kein regelmäßiges Gitter definieren, **gekennzeichnet durch**
Bestimmen zumindest einer charakteristischen Eigenstörungsfrequenz, die **durch** eine Störung des Zellen- und Pixelgitters (14, 12) aufgrund einer Nichteinheitlichkeit einer Beziehung zwischen den Zellenmitten und den Mitten der Pixel in den Zellen erzeugt ist; und
Annehmen der Rasterungsgeometrie, falls die zumindest eine charakteristische Frequenz größer als ein gegebener Wert ist.

2. Ein Verfahren gemäß Anspruch 1, bei dem die zumindest eine Frequenz eine Mehrzahl von Frequenzen aufweist.

3. Ein Verfahren gemäß Anspruch 2, bei dem der gegebene Wert, abhängig von einer Harmonische-Ordnungszahl der Frequenz variiert.

4. Ein Verfahren gemäß Anspruch 2 oder Anspruch 3, bei dem der gegebene Wert für Eigenstörungsfrequenzen mit einer höheren charakteristischen Amplitude höher ist.

5. Ein Verfahren gemäß einem der vorhergehenden Ansprüche, bei dem
die Geometrie des Pixelgitters (12) durch eine Wiederholung eines Pixels (10) **gekennzeichnet** ist; und
die Geometrie des Zellengitters (14) durch eine Wiederholung einer Zelle (16) und den Winkel zwischen dem Zellengitter (14) und dem Pixelgitter (12) **gekennzeichnet** ist.

6. Ein Verfahren gemäß Anspruch 5, bei dem ein Bild mit dem Raster unter Verwendung einer Pulsbreitenmodulation eines Schreibstrahls gedruckt werden soll.

7. Ein Verfahren gemäß Anspruch 6, bei dem eine Grundeigenstörungsfrequenz (30) der y-Komponente eines Satzes von Quantisierungsvektoren (26) der Geometrie einen gegebenen Grundwert größer 0,7B aufweist, wobei die Frequenz verglichen mit dem gegebenen Wert $|f \bmod(V^1,V^2)|$ beträgt, wobei $(V^1,V^2)$ Basisvektoren eines dualen Gitters des Zellgitters (14) sind, 2B die Breite einer Brillouin-Zone ist, die als (1/C) definiert ist, und C die Wiederholung einer Zelle (16) ist.

8. Ein Verfahren gemäß Anspruch 7, bei dem der gegebene Grundwert größer 0,8B ist.

9. Ein Verfahren gemäß Anspruch 7, bei dem der gegebene Grundwert größer 0,9B ist.

10. Ein Verfahren gemäß einem der Ansprüche 6 - 9, bei dem eine erste harmonische Eigenstörungsfrequenz (32) der y-Komponente eines Satzes von Quantisierungsvektoren (26) der Geometrie einen gegebenen ersten harmonischen Wert größer 0,5B aufweist, wobei die Frequenz verglichen mit dem gegebenen Wert $|f \bmod(V^1,V^2)|$ beträgt, wobei $(V^1,V^2)$ Basisvektoren eines dualen Gitters des Zellgitters (14) sind, 2B die Breite einer Brillouin-Zone ist, die als (1/C) definiert ist, und C die Wiederholung einer Zelle (16) ist.

11. Ein Verfahren gemäß Anspruch 10, bei dem der gegebene erste harmonische Wert größer 0,7B ist.

12. Ein Verfahren gemäß Anspruch 10, bei dem der gegebene erste harmonische Wert größer 0,8B ist.

13. Ein Verfahren gemäß einem der Ansprüche 6 bis 12, bei dem eine zweite harmonische Eigenstörungsfrequenz (38) der y-Komponente eines Satzes von Quantisierungsvektoren (26) der Geometrie einen zweiten harmonischen gegebenen Wert größer 0,2B aufweist, wobei die Frequenz verglichen mit dem gegebenen Wert $|f \bmod(V^1,V^2)|$ beträgt, wobei $(V^1,V^2)$ Basisvektoren eines dualen Gitters des Zellgitters (14) sind, 2B die Breite einer Brillouin-Zone ist, die als (1/C) definiert ist, und C die Wiederholung einer Zelle (16) ist.

14. Ein Verfahren gemäß Anspruch 13, bei dem der zweite harmonische gegebene Wert größer 0,3B ist.

15. Ein Verfahren gemäß Anspruch 13, bei dem der zweite harmonische gegebene Wert größer 0,5B ist.

16. Ein Verfahren gemäß einem der Ansprüche 7 - 15, bei dem die Funktion von dem Fehlervektor abhängig ist, wobei

17

der Vektor als der Vektor von der Mitte (20) der Zelle (16) zu der nächstgelegenen Verbindungsstelle eines Pixels (10) definiert ist.

17. Ein Verfahren gemäß Anspruch 5, bei dem ein Bild mit dem Raster unter Verwendung einer festen Größe eines geschriebenen Pixels (10) gedruckt werden soll.

18. Ein Verfahren gemäß Anspruch 17, bei dem eine Eigenstörungsfrequenz, die durch ein x,y-Frequenzpaar $(\pm1,0)$ oder$(0,\pm1)$ eines Satzes von Quantisierungsvektoren (26) der Geometrie **gekennzeichnet** ist, einen ersten gegebenen Wert größer 0,7B aufweist, wobei die Frequenz verglichen mit dem gegebenen Wert $|f \bmod(V^1,V^2)|$ beträgt, wobei $(V^1,V^2)$ Basisvektoren eines dualen Gitters des Zellgitters (14) sind, 2B die Breite einer Brillouin-Zone ist, die als (1/C) definiert ist, und C die Wiederholung einer Zelle (16) ist.

19. Ein Verfahren gemäß Anspruch 18, bei dem der erste gegebene Wert größer 0,8B ist.

20. Ein Verfahren gemäß Anspruch 18, bei dem der erste gegebene Wert größer 0,9B ist.

21. Ein Verfahren gemäß einem der Ansprüche 17- 20, bei dem eine Eigenstörungsfrequenz, die durch ein x,y-Frequenzpaar $(\pm2,0)$ oder$(0,\pm2)$ eines Satzes von Quantisierungsvektoren (26) der Geometrie **gekennzeichnet** ist, einen zweiten gegebenen Wert größer 0,5B aufweist, wobei die Frequenz verglichen mit dem gegebenen Wert $|f \bmod(V^1,V^2)$ beträgt, wobei $(V^1,V^2)$ Basisvektoren eines dualen Gitters des Zellgitters (14) sind, 2B die Breite einer Brillouin-Zone ist, die als (1/C) definiert ist, und C die Wiederholung einer Zelle (16) ist.

22. Ein Verfahren gemäß Anspruch 21, bei dem der zweite gegebene Wert größer 0,6B ist.

23. Ein Verfahren gemäß Anspruch 21, bei dem der zweite gegebene Wert größer 0,8B ist.

24. Ein Verfahren gemäß einem der Ansprüche 17 - 23, bei dem eine Eigenstörungsfrequenz, die durch ein x,y-Frequenzpaar $(\pm3,0)$ oder$(0,\pm3)$ eines Satzes von Quantisierungsvektoren (26) der Geometrie **gekennzeichnet** ist, einen dritten gegebenen Wert größer 0,2B aufweist, wobei die Frequenz verglichen mit dem gegebenen Wert $|f \bmod(V^1,V^2)$ beträgt, wobei $(V^1,V^2)$ Basisvektoren eines dualen Gitters des Zellgitters (14) sind, 2B die Breite einer Brillouin-Zone ist, die als (1/C) definiert ist, und C die Wiederholung einer Zelle (16) ist.

25. Ein Verfahren gemäß Anspruch 24, bei dem der dritte gegebene Wert größer 0,3B ist.

26. Ein Verfahren gemäß Anspruch 24, bei dem der dritte gegebene Wert größer 0,5B ist.

27. Ein Verfahren gemäß einem der Ansprüche 17 - 26, bei dem eine Eigenstörungsfrequenz, die durch ein x,y-Frequenzpaar $(\pm1,\pm1)$ eines Satzes von Quantisierungsvektoren (26) der Geometrie **gekennzeichnet** ist, einen vierten gegebenen Wert größer 0,2B aufweist, wobei die Frequenz verglichen mit dem gegebenen Wert $|f \bmod(V^1,V^2)$ beträgt, wobei $(V^1,V^2)$ Basisvektoren eines dualen Gitters des Zellgitters (14) sind, 2B die Breite einer Brillouin-Zone ist, die als (1/C) definiert ist, und C die Wiederholung einer Zelle (16) ist.

28. Ein Verfahren gemäß Anspruch 27, bei dem der vierte gegebene Wert größer 0,3B ist.

29. Ein Verfahren gemäß Anspruch 27, bei dem der vierte gegebene Wert größer 0,5B ist.

30. Ein Verfahren gemäß einem der Ansprüche 17 - 29, bei dem eine Eigenstörungsfrequenz eines Satzes von Quantisierungsvektoren (26) der Geometrie, die durch ein x,y-Frequenzpaar $(\pm1,\pm2)$ oder$(\pm2,\pm1)$ **gekennzeichnet** ist, einen fünften gegebenen Wert größer 0,2B aufweist, wobei die Frequenz verglichen mit dem gegebenen Wert $|f \bmod(V^1,V^2)$ beträgt, wobei $(V^1,V^2)$ Basisvektoren eines dualen Gitters des Zellgitters (14) sind, 2B die Breite einer Brillouin-Zone ist, die als (1/C) definiert ist, und C die Wiederholung einer Zelle (16) ist.

31. Ein Verfahren gemäß Anspruch 30, bei dem der fünfte gegebene Wert größer 0,3B ist.

32. Ein Verfahren gemäß Anspruch 30, bei dem der fünfte gegebene Wert größer 0,5B ist.

33. Ein Verfahren gemäß einem der Ansprüche 18 - 32, bei dem die Quantisierungsvektoren (26) Fehlervektoren sind, wobei die Fehlervektoren als Vektoren von der Mitte (20) von Zellen (16) zu der nächstgelegenen Verbindungsstelle eines Pixels (10) definiert sind.

**34.** Ein Verfahren gemäß einem der vorhergehenden Ansprüche, bei dem der gegebene Wert unabhängig von einem Bild ist, auf das das Raster angewandt werden soll.

**35.** Eine Trennung, die mit einem Raster gedruckt ist, das ein unregelmäßiges Gitter aufweist und Pixel (10) an einem Pixelgitter (12) mit einer Wiederholung von Pixeln (10) und Zellen (16) an einem Zellengitter (14) mit einer Wiederholung von Zellen (16) und einem Winkel mit dem Pixelgitter (12) aufweist, unter Verwendung einer Pulsbreitenmodulation eines Schreibstrahls, wobei eine Eigenstörungsfrequenz durch eine Störung des Zellen- und des Pixelgitters (14, 12) aufgrund einer Uneinheitlichkeit der Beziehung zwischen den Zellenmitten und den Mitten der Pixel in den Zellen erzeugt ist, wobei die Eigenstörungsfrequenz der y-Komponente eines Satzes von Quatisierungsvektoren (26) der Geometrie einen ersten gegebenen Wert größer • B aufweist, wobei die Frequenz verglichen mit dem gegebenen Wert $|f \bmod(V^1, V^2)|$ beträgt, wobei $(V^1, V^2)$ Basisvektoren eines dualen Gitters des Zellgitters (14) sind, 2B die Breite einer Brillouin-Zone ist, die als (1/C) definiert ist, und C die Wiederholung von Zellen (16) ist, und wobei die Trennung eines oder mehrere der folgenden Kriterien erfüllt:

(a) die Störungsfrequenz ist die Grundeigenstörungsfrequenz (30) der y-Komponente des Satzes und wobei •0,7 beträgt;
(b) die Störungsfrequenz ist die erste harmonische Eigenstörungsfrequenz (32) der y-Komponente des Satzes und wobei •0,5 beträgt;
(c) die Störungsfrequenz ist die zweite harmonische Eigenstörungsfrequenz (38) der y-Komponente des Satzes und wobei •0,2 beträgt;

**36.** Eine Trennung gemäß Anspruch 35, bei der zumindest das Kriterium (a) erfüllt ist.

**37.** Eine Trennung gemäß Anspruch 35, bei der •für das Kriterium (a) größer 0,8 ist.

**38.** Eine Trennung gemäß Anspruch 35, bei der •für das Kriterium (a) größer 0,9 ist.

**39.** Eine Trennung gemäß einem der Ansprüche 35 - 38, bei der zumindest das Kriterium (b) erfüllt ist.

**40.** Eine Trennung gemäß Anspruch 39, bei der • für das Kriterium (b) größer 0,7 ist.

**41.** Eine Trennung gemäß Anspruch 39, bei der • für das Kriterium (b) größer 0,8 ist.

**42.** Eine Trennung gemäß einem der Ansprüche 35 - 41, bei der zumindest das Kriterium (c) erfüllt ist.

**43.** Eine Trennung gemäß Anspruch 42, bei der • für das Kriterium (c) größer 0,3 ist.

**44.** Eine Trennung gemäß Anspruch 42, bei der • für das Kriterium (c) größer 0,5 ist.

**45.** Eine Trennung gemäß einem der Ansprüche 35 - 44, bei der die Quantisierungsvektoren (26) Fehlervektoren sind, wobei die Fehlervektoren als Vektoren von der Mitte (20) von Zellen (16) zu der nächstgelegenen Verbindungsstelle mit einem Pixel (10) definiert sind.

**46.** Eine Trennung, die mit einem Raster gedruckt ist, das ein unregelmäßiges Gitter aufweist und Pixel (10) an einem Pixelgitter (12) mit einer Wiederholung von Pixeln (10) und Zellen (16) an einem Zellengitter (14) mit einer Wiederholung von Zellen (16) und einem Winkel mit dem Pixelgitter (12) aufweist, wobei eine Eigenstörungsfrequenz durch eine Störung des Zellen- und des Pixelgitters (14, 12) aufgrund einer Uneinheitlichkeit der Beziehung zwischen den Zellenmitten und den Mitten der Pixel in den Zellen erzeugt ist, wobei die Eigenstörungsfrequenz der y-Komponente eines Satzes von Quatisierungsvektoren (26) der Geometrie einen ersten gegebenen Wert größer •B aufweist, wobei die Frequenz verglichen mit dem gegebenen Wert $|f \bmod(V^1, V^2)|$ beträgt, wobei $(V^1, V^2)$ Basisvektoren eines dualen Gitters des Zellgitters (14) sind, 2B die Breite einer Brillouin-Zone ist, die als (1/C) definiert ist, und C die Wiederholung von Zellen (16) ist, und wobei die Trennung eines oder mehrere der folgenden Kriterien erfüllt:

(a) die Störungsfrequenz ist eine Eigenstörungsfrequenz eines (x,y)-Frequenzpaares ($\pm 1,0$) oder ($0, \pm 1$) des Satzes und wobei •0,7 beträgt;
(b) die Störungsfrequenz ist eine Eigenstörungsfrequenz eines (x,y)-Frequenzpaares ($\pm 2,0$) oder ($0, \pm 2$) des

Satzes und wobei • 0,5 beträgt;
(c) die Störungsfrequenz ist eine Eigenstörungsfrequenz eines (x,y)-Frequenzpaares ($\pm$3,0) oder (0,$\pm$3) des Satzes und wobei • 0,2 beträgt;
(d) die Störungsfrequenz ist eine Eigenstörungsfrequenz eines (x,y)-Frequenzpaares ($\pm$1,$\pm$1) des Satzes und wobei • 0,2 beträgt;
(e) die Störungsfrequenz ist eine Eigenstörungsfrequenz eines (x,y)-Frequenzpaares ($\pm$1,$\pm$2) oder ($\pm$2,$\pm$1) des Satzes und wobei • 0,2 beträgt;

47. Eine Trennung gemäß Anspruch 46, bei der zumindest das Kriterium (a) erfüllt ist.

48. Eine Trennung gemäß Anspruch 47, bei der • für das Kriterium (a) größer 0,8 ist.

49. Eine Trennung gemäß Anspruch 47, bei der • für das Kriterium (a) größer 0,9 ist.

50. Eine Trennung gemäß einem der Ansprüche 46 - 49, bei der zumindest das Kriterium (b) erfüllt ist.

51. Eine Trennung gemäß Anspruch 50, bei der • für das Kriterium (b) größer 0,7 ist.

52. Eine Trennung gemäß Anspruch 50, bei der • für das Kriterium (b) größer 0,8 ist.

53. Eine Trennung gemäß einem der Ansprüche 46 - 52, bei der zumindest das Kriterium (c) erfüllt ist.

54. Eine Trennung gemäß Anspruch 53, bei der • für das Kriterium (c) größer 0,3 ist.

55. Eine Trennung gemäß Anspruch 53, bei der • für das Kriterium (c) größer 0,5 ist.

56. Eine Trennung gemäß einem der Ansprüche 46 - 55, bei der zumindest das Kriterium (d) erfüllt ist.

57. Eine Trennung gemäß Anspruch 55, bei der • für das Kriterium (d) größer 0,3 ist.

58. Eine Trennung gemäß Anspruch 55, bei der • für das Kriterium (d) größer 0,5 ist.

59. Eine Trennung gemäß einem der Ansprüche 46 - 58, bei der zumindest das Kriterium (e) erfüllt ist.

60. Eine Trennung gemäß Anspruch 59, bei der • für das Kriterium (e) größer 0,3 ist.

61. Eine Trennung gemäß Anspruch 55, bei der • für das Kriterium (e) größer 0,5 ist.

62. Eine Trennung gemäß einem der Ansprüche 46 - 61, bei der die Quantisierungsvektoren (26) Fehlervektoren sind, wobei die Fehlervektoren als Vektoren von der Mitte (20) von Zellen (16) zu der nächstgelegenen Verbindungsstelle mit einem Pixel (10) definiert sind.

63. Ein rastergedrucktes Bild, bei dem zumindest zwei Trennungen gemäß einem der Ansprüche 35 - 62 gedruckt sind.

64. Ein rastergedrucktes Bild, bei dem zumindest drei Trennungen gemäß einem der Ansprüche 35 - 62 gedruckt sind.

**Revendications**

1. Procédé de détermination de l'acceptabilité d'une géométrie de criblage comprenant une géométrie de grille de cellules (14) et une géométrie de grille de pixels (12), qui ne définissent pas une grille normale, **caractérisé en ce qu'**il consiste à :

> déterminer au moins une fréquence d'auto-interférence caractéristique générée par une interférence des grilles de cellules et de pixels (14, 12) du fait d'une non uniformité d'une relation entre les centres des cellules et les centres des pixels dans les cellules ; et
> accepter la géométrie de criblage si ladite au moins une fréquence caractéristique est supérieure à une valeur donnée.

**2.** Procédé selon la revendication 1, dans lequel ladite au moins une fréquence comprend une pluralité de fréquences.

**3.** Procédé selon la revendication 2, dans lequel la valeur donnée varie en fonction d'un nombre d'harmoniques de la fréquence.

**4.** Procédé selon la revendication 2 ou la revendication 3, dans lequel la valeur donnée est plus élevée pour les fréquences d'auto-interférence ayant une amplitude caractéristique plus élevée.

**5.** Procédé selon l'une quelconque des revendications précédentes, dans lequel la géométrie de la grille de pixels (12) est **caractérisée par** une répétition des pixels (10) ; et la géométrie de la grille de cellules (14) est **caractérisée par** une répétition des cellules (16) et l'angle entre la grille de cellules (14) et la grille de pixels (12).

**6.** Procédé selon la revendication 5, dans lequel une image doit être imprimée avec le crible en utilisant une modulation de durée d'impulsion d'un faisceau d'écriture.

**7.** Procédé selon la revendication 6, dans lequel une fréquence d'auto-interférence fondamentale (30) de la composante y d'un ensemble de vecteurs de quantification (26) de ladite géométrie a une valeur fondamentale donnée supérieure à 0,7B, où la fréquence comparée à la valeur donnée est $| f \bmod(V^1, V^2) |$, où $(V^1, V^2)$ sont des vecteurs de base d'une grille double de la grille de cellules (14), 2B est la largeur d'une zone de Brillouin définie par (1/C) et C est la répétition des cellules (16).

**8.** Procédé selon la revendication 7, dans lequel la valeur fondamentale donnée est supérieure à 0,8B.

**9.** Procédé selon la revendication 7, dans lequel la valeur fondamentale donnée est supérieure à 0,9B.

**10.** Procédé selon l'une quelconque des revendications 6 à 9, dans lequel une fréquence d'auto-interférence de premier harmonique (32) de la composante y d'un ensemble de vecteurs de quantification (26) de ladite géométrie a une valeur de premier harmonique donnée supérieure à 0,5B, où la fréquence comparée à la valeur donnée est $| f \bmod (V^1, V^2) |$, où $(V^1, V^2)$ sont des vecteurs de base d'une grille double de la grille de cellules (14), 2B est la largeur d'une zone de Brillouin définie par (1/C) et C est la répétition des cellules (16).

**11.** Procédé selon la revendication 10, dans lequel la valeur de premier harmonique donnée est supérieure à 0,7B.

**12.** Procédé selon la revendication 10, dans lequel la valeur de premier harmonique donnée est supérieure à 0,8B.

**13.** Procédé selon l'une quelconque des revendications 6 à 12, dans lequel une fréquence d'auto-interférence de deuxième harmonique (38) de la composante y d'un ensemble de vecteurs de quantification (26) de ladite géométrie a une valeur de deuxième harmonique donnée supérieure à 0,2B, où la fréquence comparée à la valeur donnée est $| f \bmod(V^1, V^2) |$, où $(V^1, V^2)$ sont des vecteurs de base d'une grille double de la grille de cellules (14), 2B est la largeur d'une zone de Brillouin définie par (1/C) et C est la répétition des cellules (16).

**14.** Procédé selon la revendication 13, dans lequel la valeur de deuxième harmonique donnée est supérieure à 0,3B.

**15.** Procédé selon la revendication 13, dans lequel la valeur de deuxième harmonique donnée est supérieure à 0,5B.

**16.** Procédé selon l'une quelconque des revendications 7 à 15, dans lequel la fonction est une fonction du vecteur d'erreur, le vecteur étant défini en tant que vecteur du centre (20) de la cellule (16) à la jonction du pixel (10) le plus proche.

**17.** Procédé selon la revendication 5, dans lequel une image doit être imprimée avec le crible en utilisant une taille de pixel (10) écrit fixe.

**18.** Procédé selon la revendication 17, dans lequel une fréquence d'auto-interférence, **caractérisée par** une paire de fréquences x,y ($\pm$1,0) ou (0,$\pm$1) d'un ensemble de vecteurs de quantification (26) de ladite géométrie, a une première valeur donnée supérieure à 0,7B, où la fréquence comparée à la valeur donnée est $| f \bmod(V^1, V^2) |$ où $(V^1, V^2)$ sont des vecteurs de base d'une grille double de la grille de cellules (14), 2B est la largeur d'une zone de Brillouin définie par (1/C) et C est la répétition des cellules (16).

**19.** Procédé selon la revendication 18, dans lequel la première valeur donnée est supérieure à 0,8B.

**20.** Procédé selon la revendication 18, dans lequel la première valeur donnée est supérieure à 0,9B.

**21.** Procédé selon l'une quelconque des revendications 17 à 20, dans lequel une fréquence d'auto-interférence, **caractérisée par** une paire de fréquences x,y ($\pm$2,0) ou (0,$\pm$2) d'un ensemble de vecteurs de quantification (26) de ladite géométrie, a une deuxième valeur donnée supérieure à 0,5B, où la fréquence comparée à la valeur donnée est | f mod (V$^1$, V$^2$) |, où (V$^1$, V$^2$) sont des vecteurs de base d'une grille double de la grille de cellules (14), 2B est la largeur d'une zone de Brillouin définie par (1/C) et C est la répétition des cellules (16).

**22.** Procédé selon la revendication 21, dans lequel la deuxième valeur donnée est supérieure à 0,6B.

**23.** Procédé selon la revendication 21, dans lequel la deuxième valeur donnée est supérieure à 0,8B.

**24.** Procédé selon l'une quelconque des revendications 17 à 23, dans lequel une fréquence d'auto-interférence, **caractérisée par** une paire de fréquences x,y ($\pm$3,0) ou (0,$\pm$3) d'un ensemble de vecteurs de quantification (26) de ladite géométrie, a une troisième valeur donnée supérieure à 0,2B, où la fréquence comparée à la valeur donnée est | f mod(V$^1$, V$^2$) | où (V$^1$, V$^2$) sont des vecteurs de base d'une grille double de la grille de cellules (14), 2B est la largeur d'une zone de Brillouin définie par (1/C) et C est la répétition des cellules (16).

**25.** Procédé selon la revendication 24, dans lequel la troisième valeur donnée est supérieure à 0,3B.

**26.** Procédé selon la revendication 24, dans lequel la troisième valeur donnée est supérieure à 0,5B.

**27.** Procédé selon l'une quelconque des revendications 17 à 26, dans lequel une fréquence d'auto-interférence, **caractérisée par** une paire de fréquences x,y ($\pm$1,$\pm$1) d'un ensemble de vecteurs de quantification (26) de ladite géométrie, a une quatrième valeur donnée supérieure à 0,2B, où la fréquence comparée à la valeur donnée est | f mod (V$^1$, V$^2$) | où (V$^1$, V$^2$) sont des vecteurs de base d'une grille double de la grille de cellules (14), 2B est la largeur d'une zone de Brillouin définie par (1/C) et C est la répétition des cellules (16).

**28.** Procédé selon la revendication 27, dans lequel la quatrième valeur donnée est supérieure à 0,3B.

**29.** Procédé selon la revendication 27, dans lequel la quatrième valeur donnée est supérieure à 0,5B.

**30.** Procédé selon l'une quelconque des revendications 17 à 29, dans lequel une fréquence d'auto-interférence, d'un ensemble de vecteurs de quantification (26) de ladite géométrie, **caractérisée par** une paire de fréquences x,y ($\pm$1,+2) ou ($\pm$2,+1) a une cinquième valeur donnée supérieure à 0,2B, où la fréquence comparée à la valeur donnée est | f mod (V$^1$, V$^2$) |, où (V$^1$, V$^2$) sont des vecteurs de base d'une grille double de la grille de cellules (14), 2B est la largeur d'une zone de Brillouin définie par (1/C) et C est la répétition des cellules (16).

**31.** Procédé selon la revendication 30, dans lequel la cinquième valeur donnée est supérieure à 0,3B.

**32.** Procédé selon la revendication 30, dans lequel la cinquième valeur donnée est supérieure à 0,5B.

**33.** Procédé selon l'une quelconque des revendications 18 à 32, dans lequel les vecteurs de quantification (26) sont des vecteurs d'erreur, les vecteurs d'erreur étant définis en tant que vecteurs du centre (20) des cellules (16) à la jonction du pixel (10) le plus proche.

**34.** Procédé selon l'une quelconque des revendications précédentes, dans lequel la valeur donnée est indépendante d'une image à laquelle le crible doit être appliqué.

**35.** Séparation imprimée avec un crible ayant une grille non normale et ayant des pixels (10) sur une grille de pixels (12) ayant une répétition de pixels (10) et des cellules (16) sur une grille de cellules (14) ayant une répétition de cellules (16) et un angle avec la grille de pixels (12), en utilisant une modulation de durée d'impulsion d'un faisceau d'écriture, dans laquelle une fréquence d'auto-interférence est générée par une interférence des grilles de cellules et de pixels (14, 12) du fait d'une non uniformité de la relation entre les centres des cellules et les centres des pixels dans les cellules, dans laquelle la fréquence d'auto-interférence de la composante y d'un ensemble de vecteurs de quantification (26) de ladite géométrie a une première valeur donnée supérieure à • B, où la fréquence comparée à la valeur donnée est | f mod ($v^1$, $V^2$) I , où ($V^1$, $V^2$) sont des vecteurs de base d'une grille double de la grille de cellules (14), 2B est la largeur d'une zone de Brillouin définie par (1/C) et C est la répétition des cellules (16), et dans laquelle la séparation satisfait à un ou plusieurs des critères suivants:

(c) la fréquence d'interférence est la fréquence d'auto-interférence de deuxième harmonique (38) de la composante y de l'ensemble, et dans laquelle • est 0,2 ;

**36.** Séparation selon la revendication 35, dans laquelle au moins le critère (a) est satisfait.

**37.** Séparation selon la revendication 35, dans laquelle • pour le critère (a) est supérieur à 0,8.

**38.** Séparation selon la revendication 35, dans laquelle e pour le critère (a) est supérieur à 0, 9.

**39.** Séparation selon l'une quelconque des revendications 35 à 38, dans laquelle au moins le critère (b) est satisfait.

**40.** Séparation selon la revendication 39, dans laquelle • pour le critère (b) est supérieur à 0,7.

**41.** Séparation selon la revendication 39, dans laquelle • pour le critère (b) est supérieur à 0,8.

**42.** Séparation selon l'une quelconque des revendications 35 à 41, dans laquelle au moins le critère (c) est satisfait.

**43.** Séparation selon la revendication 42, dans laquelle • pour le critère (c) est supérieur à 0,3.

**44.** Séparation selon la revendication 42, dans laquelle • pour le critère (c) est supérieur à 0,5.

**45.** Séparation selon l'une quelconque des revendications 35 à 44, dans laquelle les vecteurs de quantification (26) sont des vecteurs d'erreur, les vecteurs d'erreur étant définis en tant que vecteurs du centre (20) des cellules (16) à la jonction du pixel (10) le plus proche.

**46.** Séparation imprimée avec un crible ayant une grille non normale et ayant des pixels (10) sur une grille de pixels (12) ayant une répétition de pixels (10) et des cellules (16) sur une grille de cellules (14) ayant une répétition de cellules (16) et un angle avec la grille de pixels (12), dans laquelle une fréquence d'auto-interférence est générée par une interférence des grilles de cellules et de pixels (14, 12) du fait d'une non uniformité de la relation entre les centres des cellules et les centres des pixels dans les cellules, dans laquelle la fréquence d'auto-interférence d'un ensemble de vecteurs de quantification (26) de ladite géométrie a une première valeur donnée supérieure à • B, où la fréquence comparée à la valeur donnée est | f mod ($V^1$, $V^2$) | ,où ($V^1$, $V^2$) sont des vecteurs de base d'une grille double de la grille de cellules (14), 2B est la largeur d'une zone de Brillouin définie par (1/C) et C est la répétition de cellules (16), et dans laquelle la séparation satisfait à un ou plusieurs des critères suivantes :

(a) la fréquence d'interférence est une fréquence d'auto-interférence d'une paire de fréquences (x,y) ($\pm$1,0) ou (0,$\pm$1) de l'ensemble, et dans laquelle • est 0,7 ;
(b) la fréquence d'interférence est une fréquence d'auto-interférence d'une paire de fréquences (x,y) ($\pm$2,0) ou (0,$\pm$2) de l'ensemble, et dans laquelle • est 0,5 ;
(c) la fréquence d'interférence est une fréquence d'auto-interférence d'une paire de fréquences (x,y) ($\pm$3,0) ou (0,$\pm$3) de l'ensemble, et dans laquelle • est 0,2 ;
(d) la fréquence d'interférence est une fréquence d'auto-interférence d'une paire de fréquences (x,y) ($\pm$1,$\pm$1) de l'ensemble, et dans laquelle • est 0,2 ;
(e) la fréquence d'interférence est une fréquence d'auto-interférence d'une paire de fréquences (x,y) ($\pm$1,$\pm$2) ou ($\pm$2,$\pm$1) de l'ensemble, et dans laquelle • est 0,2.

**47.** Séparation selon la revendication 46, dans laquelle au moins le critère (a) est satisfait.

**48.** Séparation selon la revendication 47, dans laquelle • pour le critère (a) est supérieur à 0,8.

**49.** Séparation selon la revendication 47, dans laquelle • pour le critère (a) est supérieur à 0,9.

**50.** Séparation selon l'une quelconque des revendications 46 à 49, dans laquelle au moins le critère (b) est satisfait.

**51.** Séparation selon la revendication 50, dans laquelle • pour le critère (b) est supérieur à 0,7.

**52.** Séparation selon la revendication 50, dans laquelle • pour le critère (b) est supérieur à 0,8.

**53.** Séparation selon l'une quelconque des revendications 46 à 52, dans laquelle au moins le critère (c) est satisfait.

**54.** Séparation selon la revendication 53, dans laquelle • pour le critère (c) est supérieur à 0,3.

**55.** Séparation selon la revendication 53, dans laquelle • pour le critère (c) est supérieur à 0,5.

**56.** Séparation selon l'une quelconque des revendications 46 à 55, dans laquelle au moins le critère (d) est satisfait.

**57.** Séparation selon la revendication 55, dans laquelle • pour le critère (d) est supérieur à 0,3.

**58.** Séparation selon la revendication 55, dans laquelle • pour le critère (d) est supérieur à 0,5.

**59.** Séparation selon l'une quelconque des revendications 46 à 58, dans laquelle au moins le critère (e) est satisfait.

**60.** Séparation selon la revendication 59, dans laquelle • pour le critère (e) est supérieur à 0,3.

**61.** Séparation selon la revendication 55, dans laquelle • pour le critère (e) est supérieur à 0,5.

**62.** Séparation selon l'une quelconque des revendications 46 à 61, dans laquelle les vecteurs de quantification (26) sont des vecteurs d'erreur, les vecteurs d'erreur étant définis en tant que vecteurs du centre (20) des cellules (16) à la jonction du pixel (10) le plus proche.

**63.** Image imprimée par crible dans laquelle au moins deux séparations sont imprimées selon l'une quelconque des revendications 35 à 62.

**64.** Image imprimée par crible dans laquelle au moins trois séparations sont imprimées selon l'une quelconque des revendications 35 à 62.

Fig. 1

Fig. 2

Fig. 3

Fig. 4

Fig. 5

Fig. 6

10,18

Fig. 7A

Fig. 7B

Fig. 8

Fig. 9

Fig. 10

Fig. 11

Fig. 12

Fig. 13

EP 1 256 230 B1

Fig. 14

# Fig. 15

Fig. 16

Fig. 17

Fig. 18

Fig. 19

Fig. 20

Fig. 21

Fig. 22

Fig. 23

Fig. 24

Fig. 25

Fig. 26

Fig. 27

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4456924 A
- US 4700235 A
- EP 0427380 A2
- EP 0525520 A

**Non-patent literature cited in the description**

- **Bartles, R.** Redistributing Dot Connections to Avoid Visible Tile Replication in AM Halftone Screens. *IS&T's NIP15: International Conference on Digital Printing Technologies,* 1999, 354-357
- **Yoshiharu Morimoto et al.** Screening and Moiré Suppression in Printing and its Analysis by Fourier Transform. *Systems & Computers in Japan, US, Scripta Technica Journals,* 1990, vol. 21 (2), 98-105